(19)

Europäisches
Patentamt

European
Patent Office

Office européen
des brevets

(11) **EP 4 787 360 A1**

(12) **EUROPEAN PATENT APPLICATION**
published in accordance with Art. 153(4) EPC

(43) Date of publication:
**05.08.2026 Bulletin 2026/32**

(21) Application number: **24888953.7**

(22) Date of filing: **14.10.2024**

(51) International Patent Classification (IPC):
**G09G 3/34** (2006.01)     **G06T 7/13** (2017.01)
**G06T 7/90** (2017.01)     **G06V 10/56** (2022.01)
**G06V 10/82** (2022.01)     **G06V 10/764** (2022.01)

(52) Cooperative Patent Classification (CPC):
**G09G 3/3413; G06T 7/13; G06T 7/90; G06V 10/56;
G06V 10/764; G06V 10/82; G09G 3/34;
G09G 3/3426;** G09G 2320/0271; G09G 2320/0285;
G09G 2320/0646; G09G 2330/021; G09G 2360/16

(86) International application number:
**PCT/KR2024/015489**

(87) International publication number:
**WO 2025/100759 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.11.2023   KR 20230155648
27.12.2023   KR 20230193171**

(71) Applicant: **Samsung Electronics Co., Ltd.
Suwon-si, Gyeonggi-do 16677 (KR)**

(72) Inventors:
• **CHOI, Jihyeok**
  **Suwon-si, Gyeonggi-do 16677 (KR)**
• **PARK, Daehyun**
  **Suwon-si, Gyeonggi-do 16677 (KR)**
• **YOO, Jaein**
  **Suwon-si, Gyeonggi-do 16677 (KR)**
• **LEE, Kyuheon**
  **Suwon-si, Gyeonggi-do 16677 (KR)**

(74) Representative: **Appleyard Lees IP LLP
G Mill
Dean Clough Industrial Park
Halifax HX3 5AH (GB)**

(54) **DISPLAY DEVICE AND OPERATION METHOD THEREOF**

(57)     Provided are a display apparatus and an operating method thereof, the display apparatus including: a display; memory storing one or more instructions; and one or more processors configured to execute the one or more instructions stored in the memory, wherein the one or more instructions, when executed by the one or more processors individually or collectively, cause the display apparatus to: obtain, for an image comprising at least one analysis area, image complexity information of the at least one analysis area, classify the at least one analysis area into a class based on the image complexity information, and generate a dimming control signal configured to control a brightness of the at least one analysis area based on the class.

FIG. 1

EP 4 787 360 A1

**Description**

TECHNICAL FIELD

The disclosure relates to a display apparatus and an operating method thereof, and more particularly, to brightness control to reduce power consumption of the display apparatus.

BACKGROUND ART

A display apparatus needs to constantly output light while providing information for the user, and thus consumes more power than other electronic devices.

Various research for reducing power consumption of display apparatuses is under way. For example, there are technologies that, by using a camera, reduce screen brightness, switch the display apparatus into a power saving mode, or have only a portion of the display panel turned on, while a viewer is absent.

However, these technologies have no power consumption reduction effect when the user is viewing the display apparatus, or if they do, they diminish the viewing experience of the user as visual impressions felt by the user are changed when the screen brightness is lowered.

A dimming technology for controlling brightness of the display screen has been provided. The dimming technology is to control brightness of a light emitting diode (LED) backlight unit with LEDs as light sources or control brightness of a self-luminous display such as organic LEDs (OLEDs).

The dimming technology may reduce or adjust the intensity of a current to be applied to the light source based on the signal size of an image input to the display apparatus. A way to reduce the intensity of the current to the light source to reduce power consumption, however, inevitably causes deterioration of brightness performance of the display apparatus, diminishing the viewing experience of the user.

Hence, research is required regarding maintaining the viewing experience of the user while lowering the brightness to reduce power consumption.

DISCLOSURE OF INVENTION

SOLUTION TO PROBLEM

According to an aspect of the disclosure, a display apparatus includes: a display; memory storing one or more instructions; and one or more processors configured to execute the one or more instructions stored in the memory.

The one or more instructions, when executed by the one or more processors individually or collectively, cause the display apparatus to obtain, for an image including at least one analysis area, image complexity information of the at least one analysis area.

The one or more instructions, when executed by the one or more processors individually or collectively, cause the display apparatus to classify the at least one analysis area into a class based on the image complexity information.

The one or more instructions, when executed by the one or more processors individually or collectively, cause the display apparatus to generate a dimming control signal configured to control a brightness of the at least one analysis area based on the class.

According to an aspect of the disclosure, a method of operating a display apparatus, the method comprising obtaining, for an image comprising at least one analysis area, image complexity information of the at least one analysis area, classifying the at least one analysis area into a class based on the image complexity information and generating a dimming control signal configured to control a brightness of the at least one analysis area based on the class.

According to an aspect of the disclosure, a non-transitory computer readable medium has instructions stored therein, which when executed by at least one processor cause the at least one processor to execute a method of operating a display apparatus.

BRIEF DESCRIPTION OF DRAWINGS

The above and other aspects and features of certain embodiments of the present disclosure will be more apparent from the following description taken in conjunction with the accompanying drawings, in which:

FIG. 1 illustrates an operation in which a display apparatus controls screen brightness by analyzing image complexity, according to an embodiment of the disclosure;
FIG. 2 is a flowchart illustrating an operating method of a display apparatus, according to an embodiment of the disclosure;

FIG. 3 illustrates an image divided into at least one analysis area, according to an embodiment of the disclosure;

FIG. 4 illustrates an operation in which a display apparatus detects object information of an image, according to an embodiment of the disclosure;

FIG. 5 illustrates a red, green, blue (RGB) color space and a hue, saturation, value (HSV) color space, according to an embodiment of the disclosure;

FIG. 6 is an example of a hue histogram of an image computed by a display apparatus, according to an embodiment of the disclosure;

FIG. 7 illustrates an operation in which a display apparatus detects edge components of an image, according to an embodiment of the disclosure;

FIG. 8 is a table representing an example of references, based on which a display apparatus uses image information to determine a class of an image, according to an embodiment of the disclosure;

FIG. 9A illustrates examples of pulse width modulation (PWM) signals according to dimming values, according to an embodiment of the disclosure;

FIG. 9B illustrates examples of pulse amplitude modulation (PAM) signals according to dimming values, according to an embodiment of the disclosure;

FIG. 10 is a block diagram of a display apparatus, according to an embodiment of the disclosure;

FIG. 11A is a block diagram of a display, according to an embodiment of the disclosure;

FIG. 11B illustrates an example of a layout of an image analysis area, a display panel and a backlight unit;

FIG. 12 is a block diagram of a display, according to an embodiment of the disclosure;

FIG. 13 illustrates brightness when a display apparatus performs local dimming for each analysis area, according to an embodiment of the disclosure;

FIG. 14 is a detailed block diagram of a display apparatus, according to an embodiment of the disclosure; and

FIG. 15 is a flowchart illustrating an operation method by which a display apparatus controls a dimming control signal depending on image complexity, according to an embodiment of the disclosure.

## MODE FOR THE INVENTION

Embodiments of the disclosure will now be described with reference to accompanying drawings to assist those of ordinary skill in the art in implementing them. However, the embodiments of the disclosure may be implemented in many different forms, and the disclosure is not limited thereto as will be discussed herein.

Throughout the disclosure, the expression "at least one of a, b or c" indicates only a, only b, only c, both a and b, both a and c, both b and c, all of a, b, and c, or variations thereof.

The terms are selected as common terms widely used now, taking into account principles of the disclosure, which may however depend on intentions of those of ordinary skill in the art, judicial precedents, emergence of new technologies, and the like. Therefore, the terms should not only be construed by their names, but should be defined based on their meanings and descriptions throughout the disclosure.

The terminology as used herein is only used for describing particular embodiments of the disclosure and not intended to limit the disclosure.

When A is said to "be connected" to B, it means to be "directly connected" to B or "electrically connected" to B with C located between A and C.

Throughout the specification and claims, "the" and the similar term are used to denote a thing or things already mentioned or assumed to be common knowledge. Operations for describing a method according to the disclosure may be performed in a suitable order unless the context clearly dictates otherwise. The disclosure is not, however, limited to the described order of the operations.

Expressions such as "in some embodiments" or "in an embodiment" mentioned throughout the specification are not intended to indicate the same embodiment.

Some embodiments of the disclosure may be described in terms of functional block elements and various processing operations. Some or all of the functional blocks may be implemented by any number of hardware and/or software components configured to perform the specified functions. For example, the functional blocks may be implemented by one or more microprocessors or circuit elements having dedicated functions. Furthermore, for example, the functional blocks may be implemented in various programing or scripting languages. The functional blocks may be implemented in algorithms executed on one or more processors. Moreover, the disclosure may employ any number of traditional techniques for electronic configuration, signal processing and/or data processing. The words "mechanism", "element", "means", and "configuration" are used broadly and are not limited to mechanical or physical embodiments, but can include software routines in conjunction with processors, etc.

Connecting lines or members between the elements illustrated in the accompanying drawings are illustratively shown as functional and/or physical connections or circuit connections. In practice, functional, physical, or circuit connections that may be replaced or added may be employed between the elements.

The terms "unit", "module", "block", etc., as used herein each represent a unit for handling at least one function or operation, and may be implemented in hardware, software, or a combination thereof.

The terms "processor" may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The term "user" refers to a person who uses a display apparatus, including a consumer, an evaluator, a viewer, a manager or an installation engineer. Furthermore, the term "manufacturer" or "provider" may refer to a manufacturing company that manufactures the display apparatus and/or components included in the display apparatus.

In the disclosure, an image may include a still image, graphics, a picture, a frame, a moving image comprised of a plurality of consecutive still images or a video.

Functions related to artificial intelligence (AI) in the disclosure are operated through a processor and a memory. There may be one or more processors. The one or more processors may include a universal processor such as a central processing unit (CPU), an application processor (AP), a digital signal processor (DSP), etc., a dedicated graphic processor such as a graphic processing unit (GPU), a vision processing unit (VPU), etc., or a dedicated AI processor such as a neural processing unit (NPU). The one or more processors may control processing of input data according to a predefined operation rule or an AI model stored in the memory. When the one or more processors are the dedicated AI processors, they may be designed in a hardware structure that is specific to dealing with a particular AI model.

In the disclosure, a neural network is described as an example of an artificial neural network model that simulates the cranial nerves, and embodiments of the disclosure are not limited to an artificial neural network that employs a particular algorithm. For example, and without limitation, the term "neural network" may refer to a deep neural network.

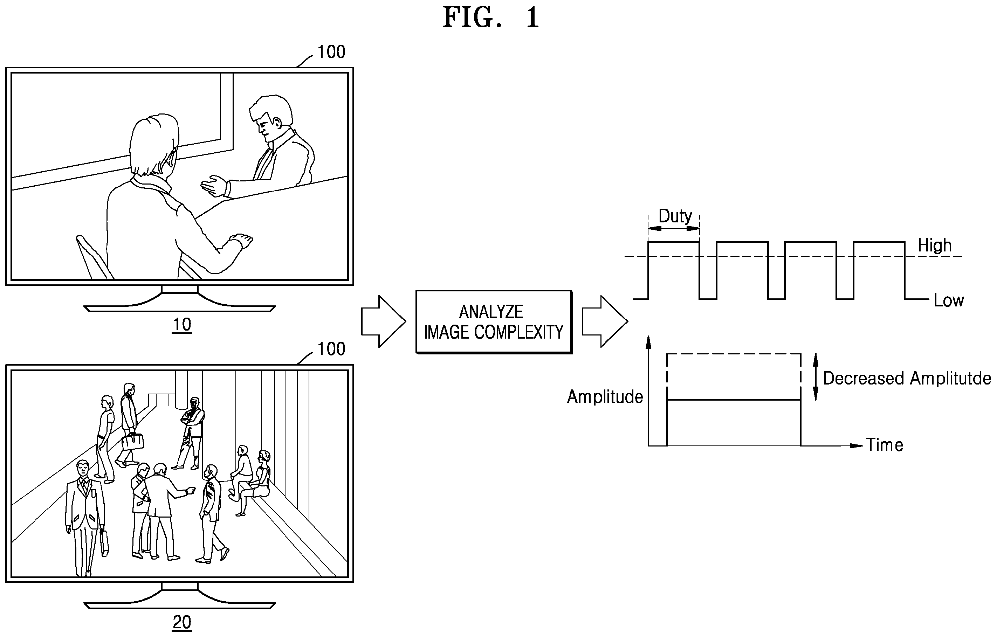

FIG. 1 illustrates an operation in which a display apparatus controls screen brightness by analyzing image complexity, according to an embodiment of the disclosure.

Referring to FIG. 1, the display apparatus 100 may display a first image 10 and a second image 20 on the screen.

In general, as distributions of objects or colors are diverse in the image displayed on the screen, a viewer does not fix on one thing but tracks multiple objects with his/her eyes.

Furthermore, according to Weber's law, human sensory organs may feel a change in stimulus only when a difference in intensity between a first stimulus and a stimulus given next has at least a certain ratio.

Based on the aforementioned principles, when there are various objects and various colors that are not eye-catching in the image, the viewer may not recognize a change in brightness even when the brightness of the image is lowered.

In the disclosure, a degree of diversity of an object distribution or color distribution in an image may be referred to as image complexity. For example, an image with a diverse object distribution or color distribution may be expressed as having high complexity, and an image with a simple object distribution or color distribution may be expressed as having low complexity.

For example, in the first image 10, there are two objects and a relatively simple color distribution. The display apparatus 100 may analyze the number of objects and the color distribution in the first image 10 and determine that the image complexity of the first image 10 is low.

In contrast, in the second image 20, there are many objects and a relatively diverse color distribution. The display apparatus 100 may analyze the number of objects and the color distribution in the second image 20 and determine that the image complexity of the second image 20 is high.

In an embodiment of the disclosure, the display apparatus 100 may maintain the brightness of an image with low image complexity, and lower the brightness of an image with high image complexity. For example, the display apparatus 100 may reduce the brightness of the second image 20 as much as possible while remaining unnoticeable to the viewer. The display apparatus 100 may maintain the brightness of the first image 10 or reduce it to a lesser degree.

In an embodiment of the disclosure, the display apparatus 100 may obtain, from the image, image information relating to image complexity. The display apparatus 100 may determine a class for classifying the image based on the image complexity information. The class may range from a class with low image complexity to a class with high image complexity. The display apparatus 100 may generate a dimming control signal to control the brightness of the image based on the determined class. The display apparatus 100 may control the light source by adjusting the dimming control signal with the use of a dimming value, thereby controlling the brightness of the image. The dimming may be represented by an intensity or ratio from 0 to 100.

For example, the display apparatus 100 may make the brightness of an image with high image complexity darker by providing a dimming value of a high intensity. The display apparatus 100 may maintain or lower the brightness of an image with low image complexity to a lesser degree by providing a dimming value of a weak intensity for the image.

For example, when the display apparatus 100 controls the light source by using a pulse width modulation (PWM) signal with logic high and logic low states, it may adjust a duty ratio of the PWM signal by the dimming intensity. Furthermore, for example, when the display apparatus 100 controls the light source by using a pulse amplitude modulation (PAM) signal, it may adjust an amplitude of the PAM signal by the dimming intensity.

The display apparatus 100 may reduce power consumption by selectively lowering the brightness for an image with high image complexity. Even when the brightness of the image with high image complexity is lowered, the viewer may not recognize the change of the brightness, so the viewing experience of the viewer continues.

An operating method of the display apparatus 100 for reducing power consumption will be described in detail with reference to other drawings.

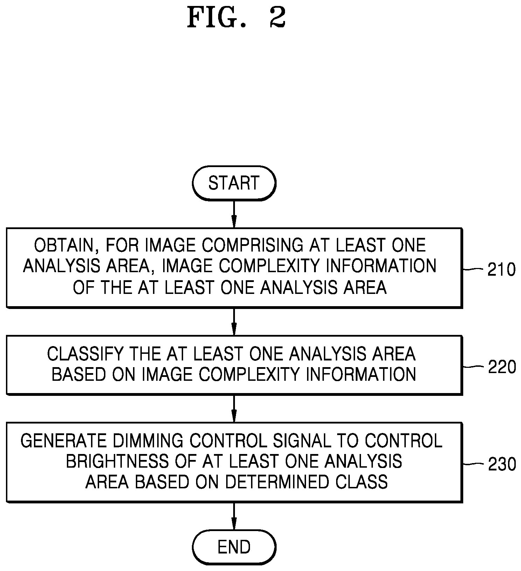

FIG. 2 is a flowchart illustrating an operating method of a display apparatus, according to an embodiment of the disclosure.

In operation 210, the display apparatus 100 may obtain, for image comprising at least one analysis area, image information related to image complexity of the at least one analysis area. In the disclosure, image information related to image complexity may be referred to as image complexity information.

In an embodiment of the disclosure, the display apparatus 100 may divide the image into at least one analysis area. In an embodiment of the disclosure, the image may include at least one analysis area. The image may be output onto the screen of the display apparatus 100.

In the disclosure, the analysis areas may be virtual areas divided from the image to analyze image complexity. The image complexity may be analyzed for each analysis area.

The analyzing of the image complexity may mean identifying whether the object distribution or color distribution of the image is diverse or simple. Furthermore, the analyzing of the image complexity may mean detecting image information relating to an object distribution or color distribution and classifying as an image with high image complexity or an image with low image complexity based on the detected image information.

In an embodiment of the disclosure, the at least one analysis area may include one or multiple analysis areas.

In an embodiment of the disclosure, the display apparatus 100 may divide an image into multiple analysis areas. In this case, the display apparatus 100 may analyze image complexity for each of the multiple analysis areas.

Alternatively, for example, the display apparatus 100 may regard the whole area of the image as a single analysis area. In this case, the display apparatus 100 may analyze image complexity of the whole area of the image.

In an embodiment of the disclosure, the display apparatus 100 may obtain image information relating to image complexity of an image corresponding to the at least one analysis area.

In an embodiment of the disclosure, the image information relating to image complexity may include at least one of the number of objects in the image, the number of hue ranges with cumulative pixels in the image, or an edge component ratio of the image. For example, the greater the number of objects in the image, the more diverse the object distribution, so the higher the image complexity. For example, the greater the number of hue ranges where pixels are accumulated in the image, the more diverse the signal distribution, so the higher the image complexity. For example, the higher the edge component ratio of the image, the higher the image complexity.

In an embodiment of the disclosure, image information of at least one analysis area may include at least one of the number of objects in the at least one analysis area, the number of hue ranges with cumulative pixels in the at least one analysis area, or an edge component ratio of the at least one analysis area.

In an embodiment of the disclosure, the display apparatus 100 may obtain the number of objects in an image by applying the image to an AI model. In an embodiment of the disclosure, the display apparatus 100 may apply the image itself to the AI model. Alternatively, for example, the display apparatus 100 may apply every analysis area belonging to the image to the AI model. In this case, the AI model may infer an object that exists in the image and output data related to the object. The display apparatus 100 may analyze image complexity based on the number of objects in the image.

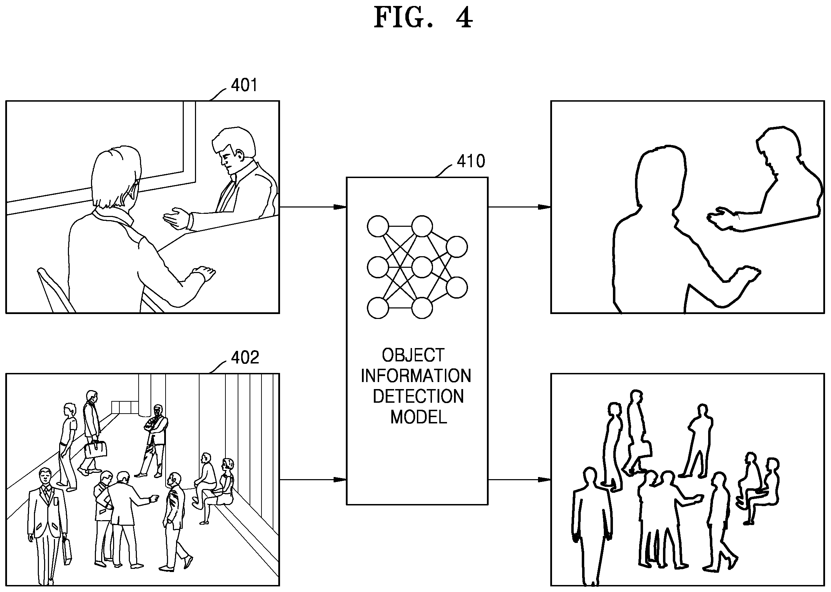

In the disclosure, the AI model may be referred to as an object information detection model. The object information detection model may be an AI model trained to receive the image as an input to output data related to the object in the image. For example, the object information detection model may be an AI model trained to infer an area where an object is present (object area) in the image and infer the number of object areas. An operation in which the AI model outputs data related to the object in an image will be described in more detail with reference to FIG. 4.

In an embodiment of the disclosure, the display apparatus 100 may compute the number of hue ranges with cumulative pixels in the image. For example, the display apparatus 100 may compute the number of hue ranges where pixels in at least one area are accumulated. The display apparatus 100 may analyze image complexity based on the number of hue ranges with cumulative pixels.

In an embodiment of the disclosure, the display apparatus 100 may convert color components of pixels in the image. For example, the display apparatus 100 may convert pixels in the red, green, blue (RGB) format in the image into hue components (H components) in the hue, saturation, value (HSV) format.

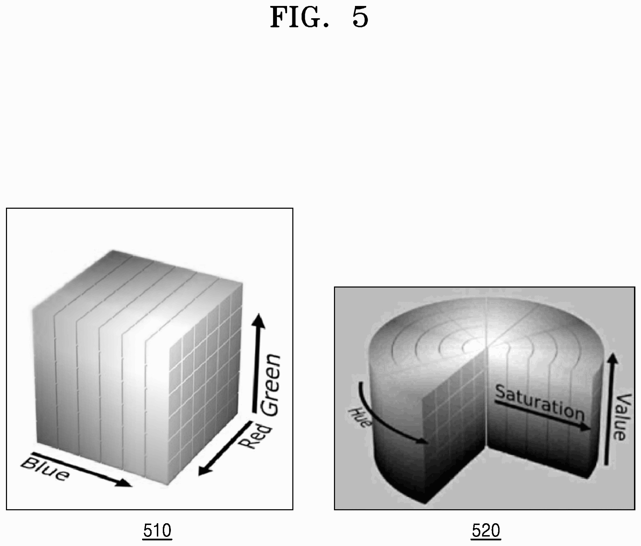

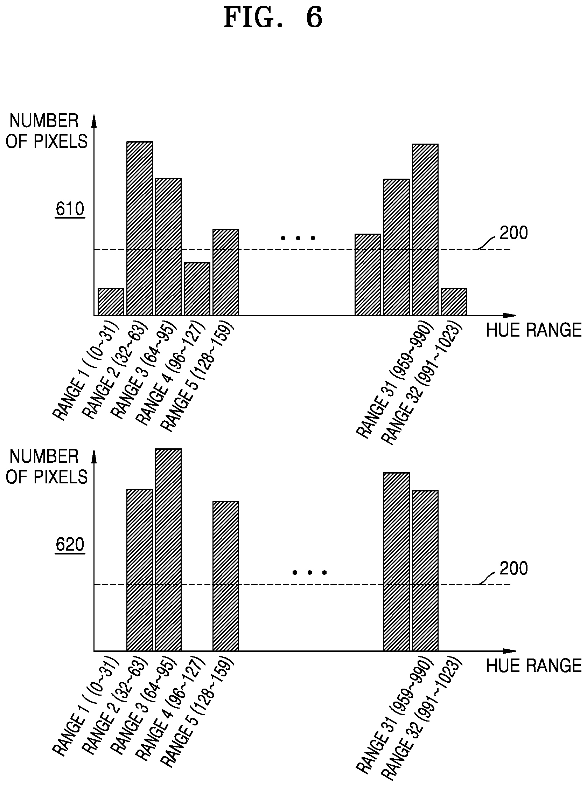

In an embodiment of the disclosure, the display apparatus 100 may obtain a hue histogram having a distribution of pixels having converted color components and accumulated in each of multiple hue ranges. For example, in the hue histogram, the hue components may be divided into multiple (e.g., N) hue ranges, where N is a natural number. In the hue histogram, each pixel in the image may be accumulated in a hue range corresponding to its hue component. The display apparatus 100 may compute the number of hue ranges where pixels are accumulated in the hue histogram. The operation of computing the number of hue ranges where pixels are accumulated in the hue histogram will be described in more detail with reference to FIGS. 5 and 6.

In an embodiment of the disclosure, the display apparatus 100 may calculate an edge component ratio of the image. For example, the display apparatus 100 may calculate the edge component ratio of the at least one area. The display apparatus 100 may analyze image complexity based on the number of hue ranges with cumulative pixels.

In the disclosure, an edge refers to a point where a significant change in color, brightness or texture occurs in the image. The term 'edge' may refer to a point at which the pixel value changes discontinuously, and may be replaced by terms "contour", "boundary", "boundary pixel", etc. An image having a lot of edges may be expressed as having low flatness. For example, a full white image or a full black image may be expressed as having no edge component. For example, an image having a diverse object distribution or signal distribution may be expressed as having a lot of edge components.

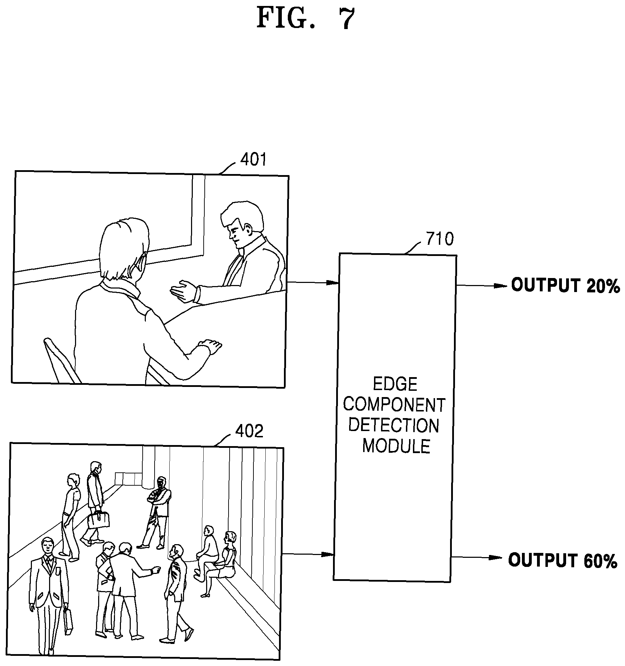

In the disclosure, the edge component ratio indicates what proportion the edge occupies in the whole image. An operation in which the display apparatus 100 calculates the edge component ratio of the image will be described in more detail with reference to FIG. 7.

In operation 220, the display apparatus 100 may classify the at least one analysis area into a class based on the image information.

In an embodiment of the disclosure, the display apparatus 100 may determine a class of the image of the at least one analysis area based on image information of the at least one analysis area, e.g., at least one of the number of objects in the image, the number of hue ranges where pixels are accumulated in the image, or the edge component ratio of the image. In an embodiment of the disclosure, the display apparatus 100 may classify the at least one analysis area into a class corresponding to the image complexity. A plurality of classes may be sorted based on the image complexity.

In an embodiment of the disclosure, the display apparatus 100 may sort classes based on the image complexity by comparing each of the number of objects in the image, the number of hue ranges where pixels are accumulated in the image and the edge component ratio of the image with a reference value.

For example, the display apparatus 100 may classify at least one analysis area having image complexity equal to or larger than the reference value into a first class. The display apparatus 100 may classify at least one analysis area having image complexity less than the reference value into a second class. The first class may correspond to a class of high image complexity, and the second class may correspond to a class of low image complexity.

For example, an analysis area with many objects in the image may be classified into the class of high image complexity. An analysis area with few objects in the image may be classified into the class of low image complexity.

For example, an analysis area with many hue ranges with cumulative pixels in a hue histogram may be classified into the class of high image complexity. An analysis area with few hue ranges with cumulative pixels in the hue histogram may be classified into the class of low image complexity.

For example, an analysis area with a high edge component ratio of the image may be classified into the class of high image complexity. An analysis area with a low edge component ratio of the image may be classified into the class of low image complexity.

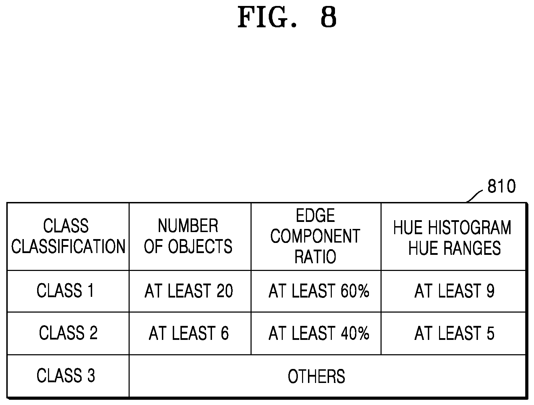

An operation of classifying into a class by comparing image information with the reference value will be described in more detail with reference to a table of FIG. 8.

In an embodiment of the disclosure, when the at least one analysis area is in the plural, the display apparatus 100 may compute at least one of the number of objects in each analysis area, the number of hue ranges with cumulative pixels in each analysis area, or an edge component ratio of each analysis area. The display apparatus 100 may determine a class of each analysis area based on image information for each analysis area. Alternatively, the display apparatus 100 may determine a class of the whole area of the image by performing a certain operation (e.g., adding operation, averaging operation, weighting operation, etc.) on the image information for each analysis area.

Alternatively, when the whole area of the image is a single analysis area, the display apparatus 100 may compute at least one of the number of objects in the whole area of the image, the number of hue ranges with cumulative pixels in the whole area, or an edge component ratio of the whole area. The display apparatus 100 may determine a class of the whole area of the image based on image information of the whole area.

In operation 230, the display apparatus 100 may generate a dimming control signal to control brightness of the at least one analysis area based on the determined class.

In an embodiment of the disclosure, the display apparatus 100 may generate a dimming control signal to lower the brightness of the image classified into the class of high image complexity. In an embodiment of the disclosure, the display apparatus 100 may generate a dimming control signal to maintain or less lower the brightness of the image classified into the class of low image complexity.

In an embodiment of the disclosure, the dimming control signal may be a signal to control the light source. For example, the light source may include at least one of a backlight unit or a display panel including pixels that emit light independently.

For example, when the display apparatus 100 uses an LED backlight unit as a light source, the dimming control signal may be a signal to control the LED backlight unit. The LED backlight unit may include a plurality of LEDs and emit light on receiving a current.

Alternatively, when the display apparatus 100 corresponds to OLEDs or micro LEDs with which respective pixels belonging to the display emit light independently, the dimming control signal may be a signal to control the current applied to each pixel.

In an embodiment of the disclosure, the dimming control signal may include a PWM signal and a PAM signal. The PWM signaling is a scheme to control the brightness by modulating the pulse width (on time or duty ratio). The PAM signaling is a scheme to control the brightness by modulating the pulse amplitude.

In an embodiment of the disclosure, the display apparatus 100 may use a dimming value to control the intensity of the dimming control signal. For example, the display apparatus 100 may control an amount of current to be applied to the backlight unit, LED array, or OLED panel based on the dimming control signal. In another example, the display apparatus 100 may control an amount of current to be applied to pixels that emit light independently based on the dimming control signal. The display apparatus 100 may control the brightness of an image displayed on the display apparatus 100.

In an embodiment of the disclosure, the dimming control signal may be controlled according to the dimming value. For example, the higher the dimming intensity, the further the intensity of the dimming control signal is reduced. With the reduced dimming control signal, the amount of current to be applied to the light source may be reduced. For example, the higher the dimming intensity, the further the duty ratio of the PWM signal is reduced or the further the amplitude of the PAM signal is reduced. Hence, the amount of current to be applied to the backlight unit or to each pixel that emits light independently may be reduced, an amount of light generated from the backlight unit or each pixel that emits light independently may be reduced, and brightness of the image displayed on the display apparatus 100 may be reduced.

Furthermore, the lower the dimming intensity, the less the amount of current to be applied to the light source may be reduced by the dimming control signal. For example, the lower the dimming intensity, the further the duty ratio of the PWM signal is increased or the further the amplitude of the PAM signal is increased. Accordingly, the amount of current to be applied to the light source may be less reduced, and the brightness of the image displayed on the display apparatus 100 may be less reduced. In an embodiment of the disclosure, the display apparatus 100 may control the brightness of an image corresponding to the analysis image based on the determined class.

For example, the display apparatus 100 may generate a dimming control signal including a first dimming value as at least one analysis area corresponds to the first class. For example, the display apparatus 100 may generate a dimming control signal including a second dimming value having a less intensity than the first dimming value as at least one analysis area corresponds to the second class. The dimming intensity being high or low may not indicate an absolute value but may indicate a relative notion between the first dimming value and the second dimming value.

For example, a PWM duty ratio of the dimming control signal including the first dimming value may be lower than a PWM duty ratio of the dimming control signal including the second dimming value. For example, a PAM amplitude of the dimming control signal including the first dimming value may be smaller than a PAM amplitude of the dimming control signal including the second dimming value.

For example, the display apparatus 100 may generate a dimming control signal adjusted with a dimming value of a low intensity for an analysis area with high image complexity. The display apparatus 100 may determine a dimming value to reduce the brightness of the analysis area with high image complexity.

For example, the display apparatus 100 may generate a dimming control signal adjusted with a dimming value of a high intensity for an analysis area with low image complexity. The display apparatus 100 may determine a dimming value to maintain or less reduce the brightness of the analysis area with low image complexity.

In an embodiment of the disclosure, the display apparatus 100 may reduce power consumption by selectively lowering the brightness for an analysis area with high image complexity. Even when the brightness of the image with high image complexity is lowered, the viewer may not recognize the change of the brightness, so the viewing experience of the viewer continues.

The display apparatus 100 may perform image processing to control the brightness of an image displayed on the display apparatus 100. For example, the display apparatus 100 may control the brightness of the image by adjusting a luminance component of the image. For example, the display apparatus 100 may use such a technology as controlling pixel values of the image, performing gamma correction, controlling a histogram that represents frequencies of the pixel values, converting into the YUV or YCbCr color space and then controlling a Y component

(luminance component). The display apparatus 100 may lower the brightness of each analysis area by reducing the luminance component.

The display apparatus 100 may use various brightness control technologies apart from the aforementioned examples to reduce the brightness of each analysis area.

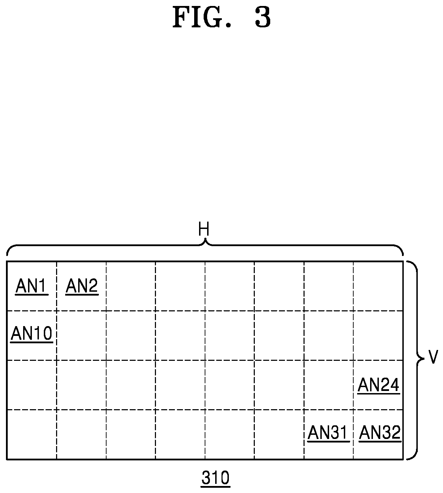

FIG. 3 illustrates an image divided into at least one analysis area, according to an embodiment of the disclosure.

In FIG. 3, shown is an occasion when an image 310 is divided into multiple analysis areas. The image 310 may include multiple analysis areas.

In an embodiment of the disclosure, the display apparatus 100 may divide the image 310 into at least one analysis area. The number of analysis areas is variable, and the image 310 may be divided regardless of the resolution of the image 310. The analysis areas may be virtual areas divided from the image to analyze image complexity. The image complexity may be analyzed for each analysis area.

For example, the image 310 may include 8 analysis areas across and 4 analysis areas long, i.e., 32 analysis areas AN1, AN2, ..., and AN32. For example, when the resolution of the image 310 is 1920 x 1080, each analysis area may have 240 x 270 pixels. For example, the display apparatus 100 may analyze image complexity of each of 32 analysis areas.

The manner in which the image 310 is divided, the number of analysis areas, the resolution, etc., are not limited to the above examples.

In an embodiment of the disclosure, the display apparatus 100 may obtain image information for each of the at least one analysis area. The display apparatus 100 may classify each of the at least one analysis area into a class based on the image complexity.

Alternatively, the display apparatus 100 may obtain image information of the whole area by performing a certain operation (e.g., adding operation, averaging operation, weighting operation, etc.) on the image information computed in each of the at least one analysis area. The display apparatus 100 may determine a class of the whole area based on the image information of the whole area.

Alternatively, unlike what is shown, the display apparatus 100 may determine a class of the whole area of the image by computing image information of the whole area of the image that is regarded as a single analysis area.

For example, when a single object is detected from analysis area 1 (AN1) and nine objects are detected from analysis area 32 (AN32), the display apparatus 100 may determine a class of each analysis area, and obtain image information of the whole area of the image 310 by summing, averaging or weighting the number of objects computed for each analysis area. Alternatively, for example, the display apparatus 100 may identify the number of objects in the whole area of the image 310 as 10. The number of hue ranges and the edge component ratio may also be identified by using the aforementioned method.

FIG. 4 illustrates an operation in which a display apparatus detects object information of an image, according to an embodiment of the disclosure.

Referring to FIG. 4, the display apparatus 100 may use an object information detection model 410 to extract object information from an image. The object information may include the identified number of objects in the image.

In an embodiment of the disclosure, the object information detection model 410 may be an AI model trained to infer an area where an object is present (object area) in the image and infer the number of object areas. The display apparatus 100 may use the object information detection model 410 to identify how many objects are present in each frame of the image.

For example, the object information detection model 410 may be an AI model trained with a learning data set including various images with objects therein. The object information detection model 410 may be trained with a learning data set to identify a simple or flat area such as the sky or the ocean as a background and identify an object area having a human, an animal, an object, etc.

For example, the display apparatus 100 may detect a bounding box that indicates an object area detected through the object information detection model 410, and infer the number of objects corresponding to the number of bounding boxes. The object information detection model 410 may include a neural network layer and weights for detecting an object area and the number of objects. For example, the object information detection model 410 may include you only look once (YOLO), single shot multibox detector (SSD), region-based convolutional neural network (R-CNN), etc., without being limited thereto.

Alternatively, in an embodiment of the disclosure, the object information detection model 410 may be an AI model trained to infer an object area in the image. In this case, the display apparatus 100 may execute one or more instructions stored in the memory to identify the number of object areas based on the object areas output from the object information detection model 410.

For example, the display apparatus 100 may input a first image 401 to the object information detection model 410. The object information detection model 410 may infer object areas in the first image 401 and output a fact that there are two object areas. The display apparatus 100 may identify that there are two objects in the first image 401.

For example, the display apparatus 100 may identify that there are nine objects in a second image 402 by inputting the second image 402 to the object information detection model 410.

As will be described later in connection with FIG. 8, the display apparatus 100 may classify the first image 401 as a low complex image and the second image 402 as a high complex image.

FIG. 5 illustrates an RGB color space 510 and an HSV color space 520, according to an embodiment of the disclosure.

Referring to FIG. 5, the display apparatus 100 may convert color components of pixels in the image. For example, the display apparatus 100 may convert a pixel in the RGB format in the image into a hue component (H component) in the HSV format.

Like the RGB format, the HSV format may display a color image in three channels. H indicates hue, S saturation and V value. The hue component may have a range from 0° to 360°. For example, red may be represented by 0° or 360°, green 120°, and blue 240°.

In an embodiment of the disclosure, the display apparatus 100 may convert a color component of the pixel in the image through Equation 1.

Equation 1:

$$R' = \frac{R}{255} \,,\ G' = \frac{G}{255} \,,\ B' = \frac{B}{255}$$

$$C_{\max} = \max(R',\, G',\, B')$$

$$C_{\min} = \min(R',\, G',\, B')$$

$$\triangle = C_{\max} - C_{\min}$$

$$\text{Hue} = \begin{cases} 0, & \Delta = 0 \\ 60 \times \left( \dfrac{G' - B'}{\Delta}\, mod\,6 \right), & C_{max} = R' \\ 60 \times \left( \dfrac{B' - R'}{\Delta} + 2 \right), & C_{max} = G' \\ 60 \times \left( \dfrac{R' - G'}{\Delta} + 4 \right), & C_{max} = B' \end{cases}$$

According to Equation 1, R', G' and B' values are calculated from respective R, G and B, each given a value from 0 to 255. The largest of R', G' and B' values is set to a maximum value Cmax and the smallest is set to a minimum value Cmin, and a difference △ between the maximum value Cmax and the minimum value Cmin is obtained. When the difference △ between the maximum value Cmax and the minimum value Cmin is 0, the hue is calculated as 0. Hue may be calculated by using different equations for the cases that the R value is the largest, the G value is the largest and the B value is the largest.

FIG. 6 is an example of a hue histogram of an image computed by a display apparatus, according to an embodiment of the disclosure.

Referring to FIG. 6, the display apparatus 100 may obtain a hue histogram of pixels converted into hue components.

The hue histogram may have a plurality of (e.g., N) hue ranges. In the hue histogram, each pixel in the image may be accumulated in a hue range corresponding to its hue component. Pixels are accumulated in each hue range. The display apparatus 100 may identify whether a color distribution in the image is diverse or simple based on a distribution of pixels accumulated in each hue range of the hue histogram.

In an embodiment of the disclosure, the display apparatus 100 may represent hue components in ten bits. For example, the display apparatus 100 may represent the hue components ranging from 0° to 360° in ten bits, i.e., with 1,024 levels. The disclosure is not limited thereto, and the hue component may be represented in various bits (e.g., eight bits, twelve bits, etc.) according to the capability of the processor or user settings.

For example, in histogram 1 610 and histogram 2 620, the hue components represented with 1024 levels may be divided into 32 hue ranges, e.g., N=32. Each of 32 hue ranges may have hue components of 32 levels. For example, range 1 may include hue components represented with 0 to 31st levels. For example, range 2 may include hue components represented with 32 to 63rd levels. For example, range 32 may include hue components represented with 991 to 1023rd levels.

For example, in the case of dividing into 32 hue ranges, 11.2° of hue components may be represented in one hue range. For example, pixels having R-series hue components are accumulated in range 1, and pixels having G-series hue components are accumulated in range 12.

However, the number of hue ranges and the number of hue component levels included in each hue range are merely examples. For example, when the hue histogram is divided into 8 hue ranges (e.g., N=8), hue components of 128 levels may exist in each of the 8 hue ranges.

In an embodiment of the disclosure, the display apparatus 100 may compute the number of hue ranges with cumulative pixels in the image. The display apparatus 100 may identify how many hue ranges there are where pixels are accumulated in the hue histogram.

For example, the display apparatus 100 may count all the hue ranges where pixels are accumulated in the hue histogram. For example, as shown in histogram 1 610, assuming that pixels are accumulated in nine ranges, the number of hue ranges may be computed as nine. For example, as shown in histogram 2 620, assuming that pixels are accumulated in five ranges, the number of hue ranges may be computed as five.

Alternatively, for example, the display apparatus 100 may count hue ranges having the number of cumulative pixels being at least a threshold among the hue ranges of the hue histogram. For example, assuming the threshold as 200 pixels, the number of hue ranges in histogram 1 610 may be computed as six. For example, the number of hue ranges in histogram 2 620 may be computed as five.

The display apparatus 100 may compute the number of hue ranges by counting hue ranges with cumulative pixels in various ways.

As will be described later in connection with FIG. 8, the display apparatus 100 may classify histogram 1 610 as a high complex image and histogram 2 620 as a low complex image.

Operations as described in connection with FIGS. 5 and 6 may be performed by executing the hue histogram detection module stored in the memory.

FIG. 7 illustrates an operation in which a display apparatus detects edge components of an image, according to an embodiment of the disclosure. .

Referring to FIG. 7, the display apparatus 100 may use an edge component detection module 710 to detect an edge component ratio from an image. The edge component ratio indicates what proportion of the image includes the edge component.

In an embodiment of the disclosure, the display apparatus 100 may execute at least one instruction stored in the edge component detection module 710 to calculate edge data obtained by performing subtracting operation between a pixel belonging to the image and a neighboring pixel. The display apparatus 100 may calculate the edge component ratio of the image by summing the edge data calculated between pixels belonging to the image. An edge is a point where there is a significant change in color, brightness or texture, so the more the edges, the larger the edge data corresponding to the data difference between neighboring pixels. The larger the edge data, the more edge components the image has.

For example, the display apparatus 100 may input the first image 401 to the edge component detection module 710 to calculate an edge component ratio of the first image 401. For example, the display apparatus 100 may identify that the edge components of the first image 401 is 20% of the whole area.

For example, the display apparatus 100 may input the second image 402 to the edge component detection module 710 to identify that the edge components of the second image 402 is 60% of the whole area.

As will be described later in connection with FIG. 8, the display apparatus 100 may classify the first image 401 as a low complex image and the second image 402 as a high complex image.

FIG. 8 is a table representing an example of references, based on which a display apparatus uses image information to determine a class of an image, according to an embodiment of the disclosure.

Referring to a table 810 of FIG. 8, the display apparatus 100 may perform classification into classes according to image complexity, based on image information of images.

For example, the display apparatus 100 may perform classification into classes based on image complexity by comparing each of the number of objects in the image, the number of hue ranges with cumulative pixels in the image and the edge component ratio of the image with a reference value.

The display apparatus 100 may perform classification into a first class when the number of objects detected from at least one analysis area is at least a reference number. The display apparatus 100 may perform classification into a second class when the number of objects detected from the at least one analysis area is less than the reference number. The first class may correspond to a class of high image complexity, and the second class may correspond to a class of low image complexity.

For example, in the table 810, a case of having at least 20 objects may be classified into class 1, a case of having less than 20 and at least 6 objects class 2, and a case of having less than 6 objects class 3. Image complexity may decrease from class 1 to class 2 to class 3.

The display apparatus 100 may perform classification into the first class when the number of hue ranges of the hue histogram computed from the at least one analysis area is at least a reference number. The display apparatus 100 may perform classification into the second class when the number of hue ranges of the hue histogram computed from the at least one analysis area is less than the reference number.

For example, in the table 810, a case of having at least 9 hue ranges may be classified into class 1, a case of having less than 9 and at least 5 hue ranges class 2, and a case of having less than 5 hue ranges class 3.

The display apparatus 100 may perform classification into the first class when the edge component ratio calculated from the at least one analysis area is at least a reference ratio. The display apparatus 100 may perform classification into the second class when the edge component ratio calculated from the at least one analysis area is less than the reference number.

For example, in the table 810, a case of having an edge component ratio of at least 60% may be classified into class 1, a case of having an edge component ratio of at least 40% and less than 60% class 2, and a case of having an edge component ratio of less than 40% class 3.

In an embodiment of the disclosure, the display apparatus 100 may perform classification into class 1 when all the number of objects in the image, the number of hue ranges with cumulative pixels in the image and the edge component ratio of the image are at least a reference value. In an embodiment of the disclosure, the display apparatus 100 may perform classification into class 1 when at least one of the number of objects in the image, the number of hue ranges with cumulative pixels in the image, or the edge component ratio of the image is at least the reference value.

Although analysis areas in the table 810 are shown as being classified into three classes, the disclosure is not limited thereto and analysis areas may be classified into more than or less than three classes.

The operation as described in FIG. 8 may be performed by a class classification module stored in the memory.

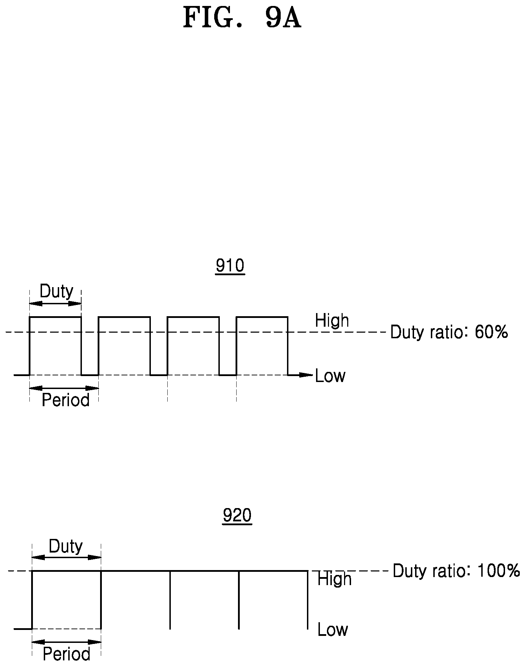

FIG. 9A illustrates examples of PWM signals according to dimming values, according to an embodiment of the disclosure.

Referring to FIG. 9A, the display apparatus 100 may control the light source with a PWM signal, according to an embodiment of the disclosure. For example, the light source may include at least one of a backlight unit or a display panel including pixels that emit light independently. The display apparatus 100 may generate a PWM signal for each analysis area based on a class for the analysis area.

The PWM signaling is a scheme to control the brightness by modulating the pulse width (on time or duty ratio). The brightness increases when the pulse is long, and the brightness decreases when the pulse is short. For example, the pulse width of a first signal 910 may be shorter than the pulse width of a second signal 920.

The PWM signal may be controlled according to the dimming intensity. For example, the higher the dimming intensity, the further the duty ratio of the PWM signal may be reduced, and the lower the dimming intensity, the further the duty ratio of the PWM signal may be increased. For example, the first signal 910 may be a PWM signal with a duty ratio reduced by a first dimming value with a high dimming intensity. For example, the second signal 920 may be a PWM signal with a duty ratio adjusted by a second dimming value with a low dimming intensity.

In an embodiment of the disclosure, the display apparatus 100 may use the first signal 910 to control the backlight unit for an analysis area with high image complexity. For example, the display apparatus 100 may provide the first signal 910 to the backlight unit when the analysis area is classified into a class of high image complexity. An amount of current applied to the backlight unit is reduced by a PWM signal with a low duty ratio, and an amount of light generated by the backlight unit may be reduced.

The display apparatus 100 may use the second signal 920 to control the backlight unit for an analysis area with low image complexity. For example, the display apparatus 100 may provide the second signal 920 to the backlight unit when the analysis area is classified into a class of low image complexity.

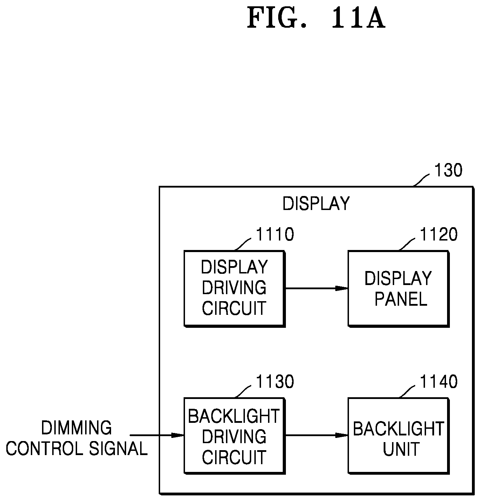

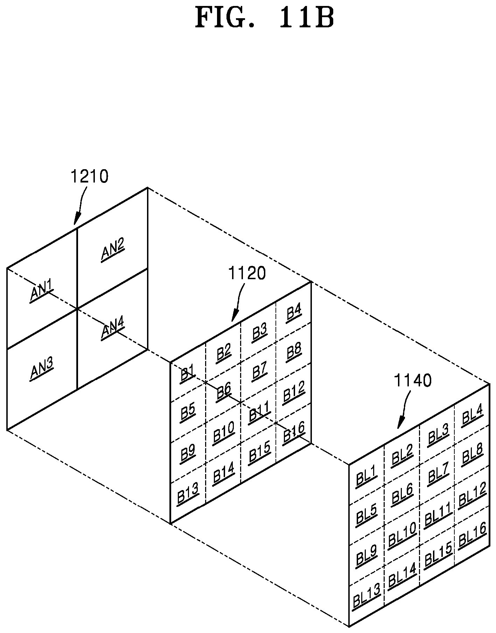

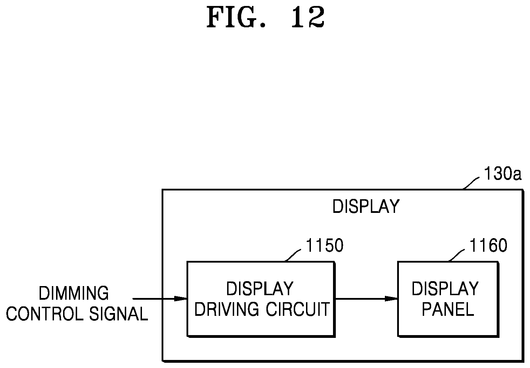

To perform local dimming, the display apparatus 100 may control the backlight unit by using an independent PWM signal for each block. The display apparatus 100 may adjust the PWM signal provided to each block belonging to the same analysis area with the same dimming value. This will be described later in connection with FIGS. 11A, 11B and 12.

When the display apparatus 100 includes a display panel having pixels that emit light independently, an amount of current applied to each pixel may be reduced through a PWM signal with a low duty ratio (first signal 910). The amount of current applied to each pixel may be less reduced through a PWM signal with a high duty ratio (second signal 920).

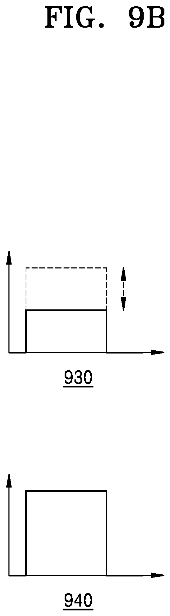

FIG. 9B illustrates examples of PAM signals according to dimming values, according to an embodiment of the disclosure.

Referring to FIG. 9A, the display apparatus 100 may control the light source with a PAM signal, according to an embodiment of the disclosure. The display apparatus 100 may generate a PAM signal for each analysis area based on a class for the analysis area.

The PAM signaling is a scheme to control the brightness by modulating the pulse amplitude. The brightness may increase when the pulse amplitude is large, and the brightness may decrease when the pulse amplitude is small. For example, the pulse amplitude of a third signal 930 may be smaller than the pulse amplitude of a fourth signal 940.

The PAM signal may be controlled according to the dimming intensity. For example, the higher the dimming intensity, the further the amplitude of the PAM signal may be reduced, and the lower the dimming intensity, the further the amplitude of the PAM signal may be increased. For example, the third signal 930 may be a PAM signal with the amplitude reduced by a first dimming value with a high dimming intensity. For example, the fourth signal 940 may be a PAM signal with the amplitude adjusted by a second dimming value with a low dimming intensity.

In an embodiment of the disclosure, the display apparatus 100 may use the third signal 930 to control the backlight unit for an analysis area with high image complexity. For example, the display apparatus 100 may provide the third signal 930 to the backlight unit when the analysis area is classified into a class of high image complexity. An amount of current applied to the backlight unit may be reduced by a PAM signal with low amplitude, and an amount of light generated by the backlight unit may be reduced.

The display apparatus 100 may use the fourth signal 940 to control the backlight unit for an analysis area with low image complexity. For example, the display apparatus 100 may provide the fourth signal 940 to the backlight unit when the analysis area is classified into a class of low image complexity.

To perform local dimming, the display apparatus 100 may control the backlight unit by using an independent PAM signal for each block. The display apparatus 100 may adjust the PAM signal provided to each block belonging to the same analysis area with the same dimming value. This will be described later in connection with FIGS. 11A, 11B and 12.

When the display apparatus 100 includes a display panel having pixels that emit light independently, an amount of current applied to each pixel may be reduced through a PWM signal with a low duty ratio (first signal 910). The amount of current applied to each pixel may be less reduced through a PWM signal with a high duty ratio (second signal 920).

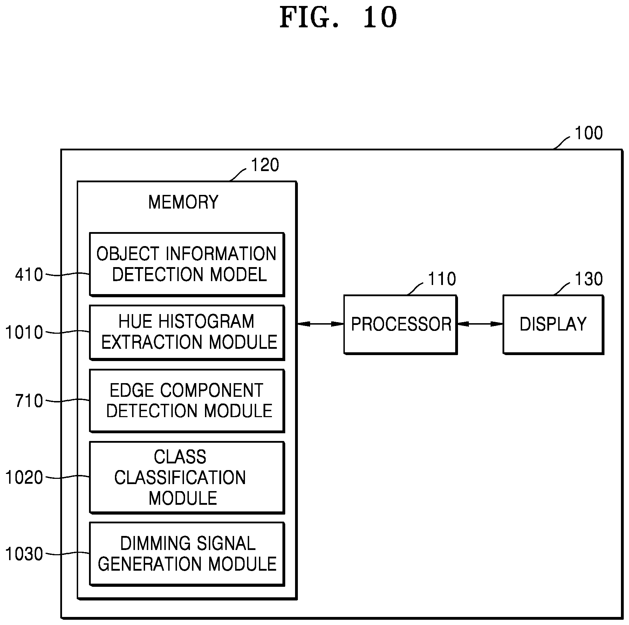

FIG. 10 is a block diagram of a display apparatus, according to an embodiment of the disclosure.

Referring to FIG. 10, the display apparatus 100 may include a processor 110, a memory 120 and a display 130.

Instructions, data structures, and program code which are readable to the processor 110 may be stored in the memory 120. There may be one or more memories 120. In an embodiment of the disclosure, operations performed by the processor 110 may be implemented by executing the instructions or codes of the program stored in the memory 120.

The memory 120 may include a flash memory type, a hard disk type, a multimedia card micro type, or a card type memory (e.g., secure digital (SD) or eXtreme digital (XD) memory), and may include a non-volatile memory including at least one of a read-only memory (ROM), an electrically erasable programmable ROM (EEPROM), a programmable ROM (PROM), a magnetic memory, a magnetic disc or an optical disc and a volatile memory such as a random access memory (RAM) or a static RAM (SRAM).

In an embodiment of the disclosure, the memory 120 may store one or more instructions and/or programs for controlling the display apparatus 100 to perform dimming control by analyzing image complexity. For example, the object information detection model 410, a hue histogram extraction module 1010, the edge component detection module 710, a class classification module 1020 and a dimming control module 1030 may be stored in the memory 120. The object information detection model 410 may be pre-trained in an external server and then released to the display apparatus 100.

The processor 110 may control general operations of the display apparatus 100. For example, the processor 110 may execute one or more instructions of a program stored in the memory 120 to control general operations for the display apparatus 100 to perform dimming control by analyzing image complexity. The processor 110 may include one or more processors.

The processor 110 may include at least one of a central processing unit (CPU), a graphics processing unit (GPU), an accelerated processing unit (APU), a many integrated core (MIC), a digital signal processor (DSP) or a neural processing unit (NPU). The processor 110 may be implemented in the form of a system on chip (SoC) with one or more electronic components integrated therein. Each of the one or more processors 110 may be implemented in separate hardware (H/W).

In an embodiment of the disclosure, the processor 110 executes one or more instructions to obtain, for an image divided into at least one analysis area, image information relating to image complexity of the at least one analysis area.

In an embodiment of the disclosure, the image information of at least one analysis area may include at least one of the number of objects in the at least one analysis area, the number of hue ranges with cumulative pixels in the at least one analysis area, or an edge component ratio of the at least one analysis area.

In an embodiment of the disclosure, the processor 110 may identify object information, e.g., the number of objects, in the image through the object information detection model 410. For example, the processor 110 may identify the number of objects in the image by applying the image to an AI model. This was described in connection with FIG. 4.

In an embodiment of the disclosure, the processor 110 may extract a hue histogram of the image through the hue histogram extraction module 1010, and identify the number of hue ranges with cumulative pixels. For example, the processor 110 may convert color components of pixels in at least one analysis area. The processor 110 may obtain a hue histogram having a distribution of pixels having a converted color component and accumulated in each of a plurality of hue ranges. The processor 110 may compute the number of hue ranges with cumulative pixels in the hue histogram. This was described in connection with FIGS. 5 and 6.

In an embodiment of the disclosure, the processor 110 may detect an edge component ratio through the edge component detection module 710. For example, the processor 110 may compute an edge component corresponding to a point where values of pixels belonging to at least one analysis area are discontinuous. This was described in connection with FIG. 7.

In an embodiment of the disclosure, the processor 110 determines a class to classify the at least one analysis area based on the image complexity information of the at least one analysis area. In an embodiment of the disclosure, the processor 110 may classify the image by class based on the image information through the class classification module 1020. This was described in connection with FIG. 8.

For example, the processor 110 may determine a class of the image based on the identified number of objects in the image. For example, when the number of objects in at least one analysis area is at least a reference number, the processor 110 may classify the at least one analysis area into the first class. When the number of objects in at least one analysis area is less than the reference number, the processor 110 may classify the at least one analysis area into the second class.

Furthermore, for example, the processor 110 may determine a class of the image based on the computed number of hue ranges. Moreover, for example, the processor 110 may determine a class of the image based on the calculated edge component ratio.

In an embodiment of the disclosure, the processor 110 generates a dimming control signal to control brightness of the at least one analysis area based on the determined class. In an embodiment of the disclosure, the processor 110 may generate a dimming control signal to control brightness of the at least one analysis area through the dimming signal generation module 1030.

In an embodiment of the disclosure, the processor 110 may generate a dimming control signal to lower the brightness of the at least one analysis area classified into a class corresponding to high image complexity. For example, the processor 110 may generate a dimming control signal adjusted with a dimming value of a high intensity. The processor 110 may lower the brightness of an image corresponding to the analysis area based on the dimming control signal adjusted with the dimming value of the high intensity.

In an embodiment of the disclosure, the processor 110 may generate a dimming control signal to maintain the brightness of at least one analysis area classified into a class corresponding to low image complexity. For example, the processor 110 may maintain or less lower the brightness of an image corresponding to the analysis area by generating the dimming control signal adjusted with a dimming value of a low intensity.

In an embodiment of the disclosure, the processor 110 may generate a dimming control signal including a first dimming value when the at least one analysis area corresponds to the first class. The processor 110 may generate a dimming control signal including a second dimming value having less intensity than the first dimming value when the at least one analysis area corresponds to the second class.

For example, a PWM duty ratio of the dimming control signal including the first dimming value may be lower than a PWM duty ratio of the dimming control signal including the second dimming value. For example, a PAM amplitude of the dimming control signal including the first dimming value may be smaller than a PAM amplitude of the dimming control signal including the second dimming value.

In an embodiment of the disclosure, the processor 110 may output the dimming control signal to the display 130.

The processor 110 may perform image processing to control the brightness of an image displayed on the display apparatus 100. For example, the processor 110 may control the brightness of the image by adjusting a luminance component of the image. The processor 110 may lower the brightness of each analysis area by reducing the luminance component of the image for each analysis area. The processor 110 may output an image including the luminance component adjusted for each analysis area by controlling the display 130.

The display 130 may include at least one of a liquid crystal display (LCD), a thin film transistor-liquid crystal display (TFT-LCD), light emitting diodes (LEDs), organic LEDs (OLEDs), micro LEDs, a flexible display, a three-dimensional (3D) display, or an electrophoretic display.

In an embodiment of the disclosure, the display 130 may receive a dimming control signal from the processor 110. The display 130 may receive a dimming control signal including the first dimming value or a dimming control signal including the second dimming value.

In an embodiment of the disclosure, the display 130 may receive a dimming control signal for at least one analysis area. For example, the display 130 may receive a dimming control signal for each analysis area.

In an embodiment of the disclosure, when the display 130 includes a backlight unit, the display 130 may control the backlight unit through the dimming control signal. For example, the display 130 may control an amount of current to be applied to the backlight unit based on the dimming control signal.

In an embodiment of the disclosure, when the display 130 includes a display panel having pixels, each of which emits light independently, the display 130 may control the respective pixels belonging to the display panel through the dimming control signal. For example, the display 130 may control an amount of current to be applied to each pixel through the dimming control signal.

For example, when receiving a dimming control signal including a first dimming value for an analysis area, the display 130 may lower the brightness of the image corresponding to the analysis area. Alternatively, for example, when receiving a dimming control signal including a second dimming value for another analysis area, the display 130 may maintain or less lower the brightness of the image corresponding to the analysis area.

An operation in which the display 130 controls the brightness for each analysis area according to an embodiment of the disclosure will now be described with reference to FIG. 10 in association with FIGS. 11A, 11B and 12.

In FIGS. 11A and 11B, the display 130 is illustrated as a non-luminous display that includes a backlight unit. In FIG. 12, the display 130 is illustrated as a self-luminous display with pixels each emitting light independently.

FIG. 11A is a block diagram of a display, according to an embodiment of the disclosure. FIG. 11B illustrates an example of a layout of an image analysis area, a display panel and a backlight unit.

Referring to FIG. 11A, the display 130 may include a display driving circuit 1110, a display panel 1120, a backlight driving circuit 1130 and a backlight unit 1140.

In an embodiment of the disclosure, the display 130 may perform local dimming. The local dimming is a technology to drive the intensity of an LED current for each block by dividing the LED backlight unit into multiple blocks. For example, the display apparatus 100 may divide the backlight unit 1140 and the display panel 1120 into multiple blocks, determine a dimming value for each block, and control the brightness of the backlight unit 1140 for each block in one frame period.

Unlike global dimming that increases or reduces the entire brightness of the backlight unit 1140, the local dimming technology may control the brightness for each block of the backlight unit 1140, thereby improving the contrast ratio and reducing power consumption.

In an embodiment of the disclosure, the display panel 1120 may include a plurality of pixels arranged in the form of a matrix. The display panel 1120 may be divided into blocks, e.g., B1 to B16 each comprised of a preset number of pixels.

The backlight unit 1140 is comprised of a plurality of light source blocks, e.g., BL1 to BL16 corresponding to the respective blocks of the display panel 1120. Each light source block may include a plurality of LEDs. The backlight unit 1140 outputs light toward the display panel 1120 for each light source block under the control of the backlight driving circuit 1130 so that an image is output through the display panel 1120.

The backlight driving circuit 1130 may drive the backlight unit 1140 for each block to control the brightness of the backlight unit 1140 for each block. For example, the backlight driving circuit 1130 may perform local dimming for the plurality of light source blocks BLs corresponding to the respective blocks according to a dimming value determined for each block. For example, the backlight driving circuit 1130 may control local dimming of the backlight unit 1140 by using a PWM technique that adjusts the ratio between turn-on and turn-off times while discontinuously driving the backlight unit 1140. Each block refers to a logical unit of pixels obtained by grouping a plurality of pixels according to a light source block, so the respective blocks may not be physically or structurally distinguished from one another.

In an embodiment of the disclosure, the backlight driving circuit 1130 may drive the backlight unit 1140 for each block according to a dimming control signal received from the processor 110. The processor 110 may determine a dimming value for each block. For example, the processor 110 may generate a dimming control signal including the same or different dimming value for each block.

In an embodiment of the disclosure, the backlight driving circuit 1130 may control the brightness of the image for each analysis area, e.g., AN1 to AN4, by using local dimming.

In this case, the block and the analysis area may differ from each other. A block is a unit for which local dimming is performed, and analysis areas may be virtual areas divided from an image displayed on the screen. Each analysis area may include one or more blocks. For example, as shown in FIG. 11B, analysis area AN1 may include four blocks B1, B2, B5 and B6. That one or more blocks are included in an analysis area may mean that one or more blocks are located where there is an analysis area in an image 1210.

In an embodiment of the disclosure, the processor 110 may determine a dimming value for each block belonging to the analysis area. The processor 110 may generate a dimming control signal having the same dimming value for one or more blocks included in the analysis area. For example, the processor 110 may generate a dimming control signal adjusted with the same dimming value for the blocks located in the same analysis area.

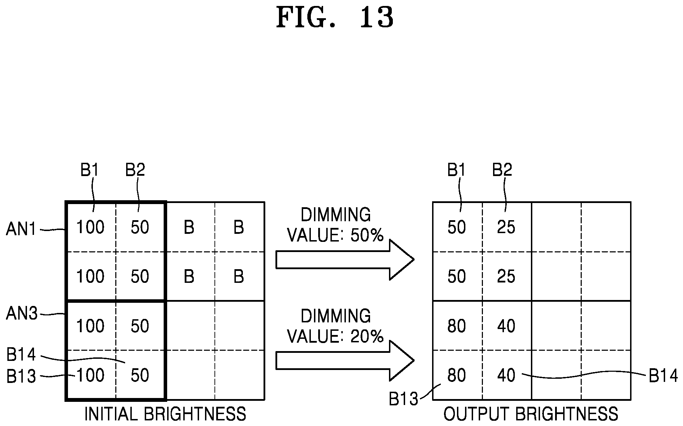

For example, the processor 110 may generate a PWM signal with a PWM duty ratio reduced by 50% for four blocks B1, B2, B5 and B6 located in analysis area AN1. For example, the processor 110 may generate a PWM signal with a PWM duty ratio reduced by 20% for four blocks B9, B10, B13 and B14 located in analysis area AN3 (see FIG. 13).

In an embodiment of the disclosure, the processor 110 may provide a dimming control signal adjusted with the same dimming value for each analysis area to the backlight driving circuit 1130.

In an embodiment of the disclosure, the backlight driving circuit 1130 may control the brightness of the backlight unit 1140 for each analysis area based on a dimming value for each analysis area. For example, blocks located in the same analysis area may be controlled with the same dimming value.

For example, when a class of each analysis area is determined, the processor 110 may identify how many blocks are included in each analysis area. The processor 110 may generate a dimming control signal for one or more blocks located in each analysis area to be adjusted with the same dimming value.

For example, the processor 110 may generate a dimming control signal to control the brightness of an analysis area corresponding to a class of high image complexity and output the dimming control signal to the backlight driving circuit 1130. For example, the dimming control signal may include a PWM signal or PAM signal adjusted with a first dimming value. The backlight driving circuit 1130 may apply a smaller amount of current than an initial amount of current to a light source block of the backlight unit 1140 corresponding to the analysis area, based on the dimming control signal. The backlight unit 1140 may generate a small amount of light based on the small amount of current. Accordingly, the brightness of the image corresponding to the analysis area may be reduced.

For example, the processor 110 may generate a dimming control signal to control the brightness of an analysis area corresponding to a class of low image complexity and output the dimming control signal to the backlight driving circuit 1130. For example, the dimming control signal may include a PWM signal or PAM signal adjusted with a second dimming value. The backlight driving circuit 1130 may apply a similar amount of current to an initial amount of current to a light source block of the backlight unit 1140 corresponding to the analysis area, based on the dimming control signal. Accordingly, the brightness of the image corresponding to the analysis area may be maintained or less reduced.

The display driving circuit 1110 may include a timing controller, a source driver, a gate driver, etc. The display driving circuit 1110 may provide image data to the display panel 1120. The image data may be data that has undergone signal processing through the processor 110.

In an embodiment of the disclosure, the display apparatus 100 may reduce power consumption by selectively lowering the brightness of an area with high image complexity for each analysis area. Even when the brightness of the image with high image complexity is lowered, the viewer may not recognize the change of the brightness, so the viewing experience of the viewer continues.

FIG. 12 is a block diagram of a display, according to an embodiment of the disclosure.

Referring to FIG. 12, a display 130a may include a display driving circuit 1150 and a display panel 1160. The display 130a differs from the display 130 as shown in FIG. 11A in that the display 130a does not include the backlight driving circuit and the backlight unit.

In an embodiment of the disclosure, the display panel 1160 may include a plurality of pixels arranged in the form of a matrix. Each of the plurality of pixels belonging to the display panel 1160 may emit light independently. For example, a pixel may include an OLED or a micro LED. Each analysis area may include at least one pixel.

In an embodiment of the disclosure, the display 130a may receive a dimming control signal from the processor 110. The display 130a may apply a current to each of the plurality of pixels belonging to the display panel 1160 by driving the display driving circuit 1150 with the received dimming control signal.

In an embodiment of the disclosure, the display 130a may control the plurality of pixels belonging to the display panel 1160 for each analysis area through the dimming control signal provided for each analysis area. For example, the display driving circuit 1150 may apply a current to at least one pixel located in each analysis area. Accordingly, the brightness of each analysis area may be controlled.

For example, the processor 110 may generate a dimming control signal to control the brightness of an analysis area corresponding to a class of high image complexity and output the dimming control signal to the display driving circuit 1150. For example, the dimming control signal may include a PWM signal with a duty ratio reduced or PAM signal with an amplitude reduced with the use of a first dimming value. The display driving circuit 1150 may apply a smaller amount of current than an initial amount of current to at least one pixel corresponding to the analysis area, based on the dimming control signal. Accordingly, the brightness of the image corresponding to the analysis area may be reduced.

For example, the processor 110 may generate a dimming control signal to control the brightness of an analysis area corresponding to a class of low image complexity and output the dimming control signal to the display driving circuit 1150. The dimming control signal may include a PWM signal with a duty ratio adjusted or PAM signal with an amplitude adjusted by using the second dimming value. The display driving circuit 1150 may apply a similar amount of current to an initial amount of current to at least one pixel corresponding to the analysis area, based on the dimming control signal. Accordingly, the brightness of the image corresponding to the analysis area may be maintained or less reduced.

FIG. 13 illustrates brightness when a display apparatus performs local dimming for each analysis area, according to an embodiment of the disclosure.

In FIG. 13, illustrated is an occasion when four blocks Bs are located in each analysis area AN.

The display apparatus 100 may control the backlight unit with the same dimming value to each of four blocks Bs belonging to each analysis area AN. The blocks located in the same analysis area may be controlled with the same dimming value. Specifically, each analysis area in an image may receive light from one or more light source blocks corresponding to the one or more blocks. A block may be comprised of a preset number of pixels, and a signal may be independently provided to each block.

For example, when there are four blocks in each analysis area and a dimming control signal adjusted with a 50% dimming value is provided to analysis area AN1, the brightness of the blocks in the analysis area may each be reduced by 50%. For example, when initial current data of block B1 is 100 and initial current data of block B2 is 50, the current data of block B1 may be reduced to 50 and the current data of block B2 may be reduced to 25 through dimming control. Current data of the respective blocks belonging to the same analysis area may be different, but the increase/decrease ratios of the current data of the respective blocks may be the same.

Furthermore, for example, when a dimming control signal adjusted with a 20% dimming value is provided to analysis area AN3, brightness of blocks in the analysis area may each be reduced by 20%. For example, when initial current data of block B13 is 100 and initial current data of block B14 is 50, the current data of block B13 may be reduced to 80 and the current data of block B14 may be reduced to 40 through dimming control.

The blocks belonging to the analysis area may be controlled with the same dimming value. Blocks belonging to different analysis areas may be controlled with the same or different dimming values. For example, when the analysis areas are classified into the same class, the blocks may be controlled with the same dimming value, and when the analysis areas are classified into different classes, they may be controlled with different dimming values. For example, a dimming value for analysis area AN1 classified as having high image complexity may have a higher intensity than a dimming value for analysis area AN3 classified as having low image complexity.

Even in the same analysis area, there may be a current data difference according to image signals. The current data difference may cause a light difference, leading to a difference in image quality. When images of neighboring areas in the same analysis area have similar signal sizes but a big current data difference, the display apparatus 100 may reduce the current data difference through an interpolation technique For example, the display apparatus 100 may interpolate current data to have a median value of current data between the neighboring areas.

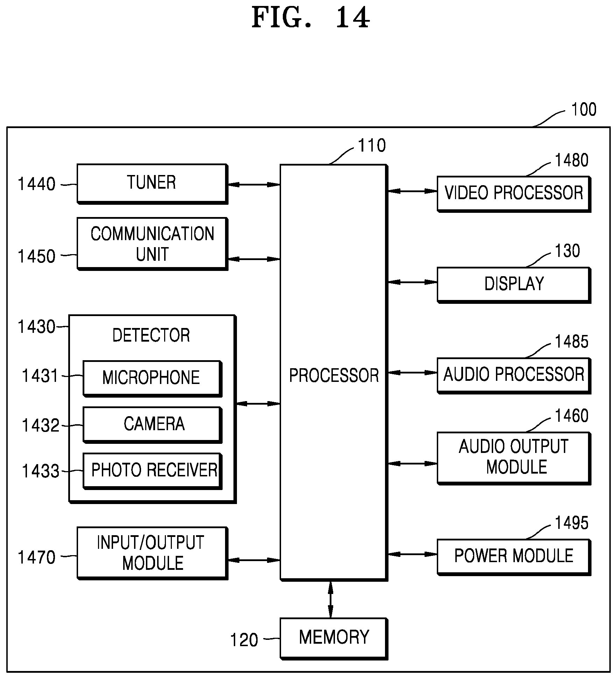

FIG. 14 is a detailed block diagram of a display apparatus, according to an embodiment of the disclosure.

Referring to FIG. 14, the display apparatus 100 may include a tuner 1440, a processor 110, a display 130, a communication unit 1450, a detector 1430, an input/output module 1470, a video processor 1480, an audio processor 1485, an audio output module 1460, a memory 120, and a power module 1495.

In an embodiment of the disclosure, the tuner 1440 may tune in to and select a frequency of a channel that the display apparatus 100 intends to receive from among a lot of radio components through amplification, mixing, resonance of broadcast signals received wiredly or wirelessly. The broadcast signal includes audio, video, and additional information, e.g., electronic program guide (EPG).

The tuner 1440 may receive broadcast signals from various sources such as terrestrial broadcasters, cable broadcasters, satellite broadcasters, Internet broadcasters, etc. The tuner 1440 may also receive broadcast signals from a source such as an analog broadcaster or a digital broadcaster.

The communication unit 1450 may transmit or receive data or signals to or from an external device or a server. For example, the communication unit 1450 may include a wireless fidelity ((Wi-Fi) module, a bluetooth module, an infrared communication module, a wireless communication module, a local area network (LAN) module, an Ethernet module, a wired communication module, etc. In this case, each communication module may be implemented in the form of at least one hardware chip.

The Wi-Fi module and the bluetooth module perform communication in a Wi-Fi scheme and a bluetooth scheme, respectively. In the case of using the Wi-Fi module or the bluetooth module, it may first transmit or receive various connection information such as a service set identifier (SSID) and a session key, use this to establish communication, and then transmit and receive various information. The wireless communication module may include at least one communication chip for performing communication according to various wireless communication standards such as zigbee, third generation (3G), third generation partnership project (3GPP), long term evolution (LTE), LTE advanced (LTE-A), fourth generation (4G), fifth generation (5G), etc.

In an embodiment of the disclosure, the detector 1430 may detect the user's voice, the user's image or the user's interaction, and may include a microphone 1431, a camera 1432, and an optical receiver 1433.

The microphone 1431 receives voice uttered by the user. The microphone 1431 may convert the received voice into an electrical signal and output the electrical signal to the processor 110.

An optical receiver 1433 receives an optical signal (including a control signal) received from an external control device through a light window on the bezel of the display 130. The optical receiver 1433 may receive an optical signal corresponding to the user input, e.g., touch, push, touching gesture, voice, or motion of the user, from the remote control device. A control signal may be extracted from the received optical signal under the control of the processor 110.

In an embodiment of the disclosure, the input/output module 1470 may receive a video (e.g., a moving image), an audio (e.g., a speech, music, etc.), additional information (e.g., an EPG), or the like from outside of the display apparatus 100. The input/output module 1470 may include any of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

In an embodiment of the disclosure, the video processor 1480 processes video data received by the display apparatus 100. The video processor 1480 may perform various image processes such as decoding, scaling, noise filtering, frame rate conversion, resolution conversion, etc., on the video data.

Furthermore, the processor 110 may include at least one of a central processing unit (CPU), a graphic processing unit (GPU) or a video processing unit (VPU). Alternatively, it may be implemented in the form of a system on chip (SoC) that integrates at least one of the CPU, the GPU or the VPU. Alternatively, the processor 110 may further include a neural processing unit (NPU).

In an embodiment of the disclosure, the memory 120 may store various data, programs, or applications for driving and controlling the display apparatus 100.

The program stored in the memory 120 may include one or more instructions. The program (one or more instructions) or the application stored in the memory 120 may be executed by the processor 110.

In an embodiment of the disclosure, the processor 110 may execute the one or more instructions stored in the memory 120 to obtain an image. The image may be stored in the memory 120 or received from an external device through the tuner 1440 or communication unit 1450. Furthermore, the image may undergo various image processing in the video processor 1480, such as decoding, scaling, noise filtering, frame rate conversion, resolution conversion, etc.

In an embodiment of the disclosure, the display 130 converts an image signal, a data signal, an on-screen display (OSD) signal, a control signal, etc., processed by the processor 110 into a driving signal. The display 130 may be implemented by a plasma display panel (PDP), a liquid crystal display (LCD), organic light emitting diodes (OLEDs), a flexible display, or a three dimensional (3D) display, or the like. Furthermore, the display 130 may have a touchscreen to be used for an input device as well as for an output device.

The audio processor 1485 processes audio data. The audio processor 1485 may perform various processes such as decoding, amplification, noise filtering, etc., on the audio data. The audio processor 1485 may include a plurality of audio processing modules to process audio corresponding to a plurality of contents.

The audio output module 1460 outputs audio included in a broadcast signal received through the tuner 1440 under the control of the processor 110. The audio output module 1460 may output audio, e.g., voice or sound, received through the communication unit 1450 or the input/output module 1470. Furthermore, the audio output module 1460 may output audio stored in the memory 120 under the control of the processor 110. The audio output module 1460 may include at least one of a speaker, a headphone output terminal or a Sony/Phillips digital interface (S/PDIF) output terminal.

The power module 1495 supplies power received from an external power source to the components in the display apparatus 100 under the control of the processor 110. Furthermore, the power module 1495 may supply power output from one or two or more batteries located in the display apparatus 100 to the internal components under the control of the processor 110.

The memory 120 may store various data, programs, or applications for driving and controlling the display apparatus 100 under the control of the processor 110. The memory 120 may include a broadcast reception module, a channel control module, a volume control module, a communication control module, a speech recognition module, a motion recognition module, a photo reception module, a display control module, an audio control module, an external input control module, a power control module, a power control module of a wirelessly connected external device, a speech database (DB), or a motion DB. The processor 110 may use the software stored in the memory 120 to perform each of the functions.

According to an embodiment of the disclosure, a display apparatus includes: a display; memory storing one or more instructions; and one or more processors configured to execute the one or more instructions stored in the memory.

In an embodiment of the disclosure, the one or more instructions, when executed by the one or more processors individually or collectively, cause the display apparatus to obtain, for an image including at least one analysis area, image complexity information of the at least one analysis area.

In an embodiment of the disclosure, the one or more instructions, when executed by the one or more processors individually or collectively, cause the display apparatus to classify the at least one analysis area into a class based on the image complexity information.

In an embodiment of the disclosure, the one or more instructions, when executed by the one or more processors individually or collectively, cause the display apparatus to generate a dimming control signal configured to control a brightness of the at least one analysis area based on the class.

In an embodiment of the disclosure, the image complexity information of the at least one analysis area may include at least one of the number of objects in the at least one analysis area, the number of hue ranges with cumulative pixels in the at least one analysis area, or an edge component ratio of the at least one analysis area.

In an embodiment of the disclosure, the display apparatus may identify a number of objects in the at least one analysis area by applying the at least one analysis area to an artificial intelligence (AI) model, and classify the at least one analysis area into the class based on the identified number of objects.

In an embodiment of the disclosure, the display apparatus may, based on the identified number of objects being at least a reference number, classify the at least one analysis area into a first class, and based on the identified number of objects being less than the reference number, classify the at least one analysis area into a second class.

In an embodiment of the disclosure, the display apparatus may convert color components of pixels in the at least one analysis area, obtain a hue histogram comprising a distribution of pixels that have the converted color components and are accumulated in each of a plurality of hue ranges, obtain a number of the plurality of hue ranges with cumulative pixels in the hue histogram, and identify the class based on the number of the plurality of hue ranges.

In an embodiment of the disclosure, the display apparatus may obtain an edge component ratio corresponding to a point where values of pixels belonging to the at least one analysis area are discontinuous, and classify the at least one analysis area into the class based on the edge component ratio.

In an embodiment of the disclosure, the display apparatus may classify the at least one analysis area into the class by obtaining an image complexity value based on the image complexity information and classifying the at least one analysis area into the class based on the image complexity value, wherein the class corresponds to image complexity values greater than or equal to a predetermined threshold, and based on the at least one analysis area being classified into the class, generate the dimming control signal to cause the brightness of the at least one analysis area to decrease.

In an embodiment of the disclosure, the display apparatus may classify the at least one analysis area into the class by obtaining an image complexity value based on the image complexity information and classifying the at least one analysis area into at least one of a first class or a second class based on the image complexity value, wherein the first class corresponds to image complexity values greater than or equal to a predetermined threshold and the second class corresponds to image complexity values less than the predetermined threshold, based on the at least one analysis area being classified into the first class, cause the dimming control signal to include a first dimming value corresponding to a first decrease in the brightness of the at least one analysis area, and based on the at least one analysis area being classified into the second class, cause the dimming control signal to include a second dimming value corresponding to a second decrease in the brightness of the at least one analysis area, wherein the second decrease in the brightness is less than the first decrease in the brightness.

In an embodiment of the disclosure, the dimming control signal comprises at least one of a pulse width modulation (PWM) signal or a pulse amplitude modulation (PAM) signal. In an embodiment of the disclosure, based on the dimming control signal including the PWM signal, a PWM duty ratio corresponding to the first dimming value may be smaller than a PWM duty ratio corresponding to the second dimming value. In an embodiment of the disclosure, based on the dimming control signal including the PAM signal, a PAM amplitude corresponding to the first dimming value may be smaller than a PAM amplitude corresponding to the second dimming value.

In an embodiment of the disclosure, the display may comprise a backlight driving circuit and a backlight unit. In an embodiment of the disclosure, the display apparatus may provide the dimming control signal to the backlight driving circuit, and wherein the backlight driving circuit is configured to control a brightness of the backlight unit based on the dimming control signal.

According to an embodiment of the disclosure, a method of operating a display apparatus, the method comprising obtaining, for an image comprising at least one analysis area, image complexity information of the at least one analysis area, classifying the at least one analysis area into a class based on the image complexity information and generating a dimming control signal configured to control a brightness of the at least one analysis area based on the class.

In an embodiment of the disclosure, the image complexity information may comprise at least one of a number of objects in the at least one analysis area, a number of hue ranges with cumulative pixels in the at least one analysis area, or an edge component ratio of the at least one analysis area.

In an embodiment of the disclosure, the obtaining the image complexity information may comprise identifying a number of objects in the at least one analysis area by applying the at least one analysis area to an artificial intelligence (AI) model, and wherein the classifying the at least one analysis area comprises classifying the at least one analysis area into the class based on the identified number of objects.

In an embodiment of the disclosure, the classifying the at least one analysis area may comprise based on the identified number of objects being at least a reference number, classifying the at least one analysis area into a first class and based on the identified number of objects being less than the reference number, classifying the at least one analysis area into a second class.

In an embodiment of the disclosure, the obtaining the image complexity information may comprise converting color components of pixels in the at least one analysis area, obtaining a hue histogram comprising a distribution of pixels that have the converted hue components and are accumulated in each of a plurality of hue ranges and obtaining a number of the plurality of hue ranges with cumulative pixels in the hue histogram. In an embodiment of the disclosure, the classifying the at least one analysis area may comprise identifying the class based on the number of the plurality of hue ranges.

In an embodiment of the disclosure, the obtaining the image complexity information may comprise obtaining an edge component ratio corresponding to a point where values of pixels belonging to the at least one analysis area are discontinuous, and the classifying the at least one analysis area comprises identifying the class based on the edge component ratio.

In an embodiment of the disclosure, the classifying the at least one analysis area may comprise obtaining an image complexity value based on the image complexity information and classifying the at least one analysis area into the class based on the image complexity value, wherein the class corresponds to image complexity values greater than or equal to a predetermined threshold.

In an embodiment of the disclosure, the generating the dimming control signal may comprise generating the dimming control signal to cause the brightness of the at least one analysis area to decrease.

In an embodiment of the disclosure, the dimming control signal comprises at least one of a pulse width modulation (PWM) signal or a pulse amplitude modulation (PAM) signal. In an embodiment of the disclosure, based on the dimming control signal including the PWM signal, a PWM duty ratio corresponding to the first dimming value may be smaller than a PWM duty ratio corresponding to the second dimming value. In an embodiment of the disclosure, based on the dimming control signal including the PAM signal, a PAM amplitude corresponding to the first dimming value may be smaller than a PAM amplitude corresponding to the second dimming value.

According to an aspect of the disclosure, a display apparatus includes: a display; memory storing one or more instructions; and one or more processors configured to execute the one or more instructions stored in the a memory, wherein the one or more instructions, when executed by the one or more processors, cause the display apparatus to: obtain, for an image including one or more analysis areas, image complexity information of each of the one or more analysis areas, wherein the image complexity information for each of the one or more analysis areas includes an image complexity value, classify each of the one or more analysis areas into a class from among a plurality of classes based on the respective image complexity values, and generate one or more dimming control signals corresponding to a respective analysis area of the one or more analysis areas, wherein each of the one or more dimming control signals is configured to control a brightness of the respective analysis area based on the class into which the respective analysis area is classified.

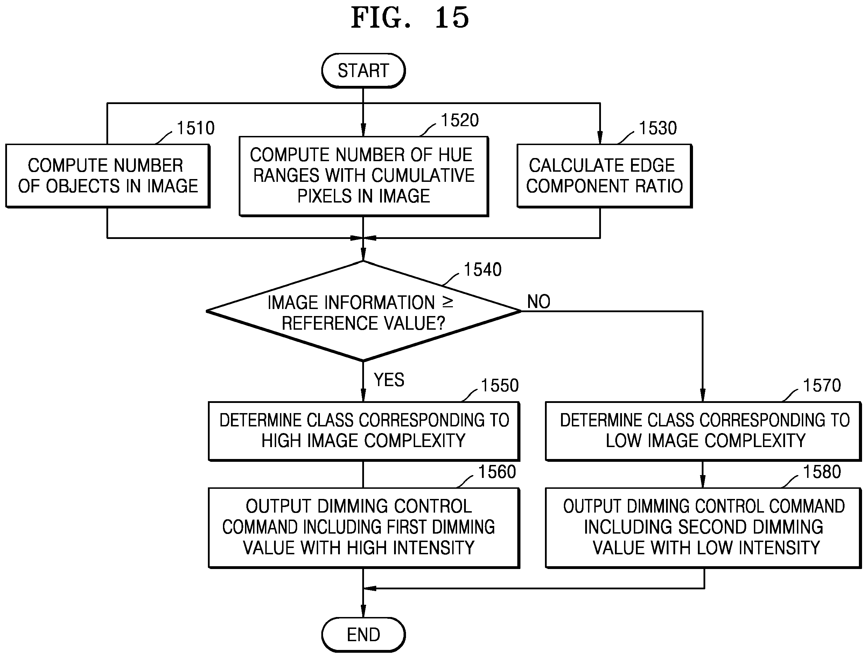

FIG. 15 is a flowchart illustrating an operation method by which a display apparatus controls a dimming control signal depending on image complexity, according to an embodiment of the disclosure.

Referring to FIG. 15, the display apparatus 100 may compute the number of objects in an image corresponding to at least one analysis area, in operation 1510.

In operation 1520, the display apparatus 100 may compute the number of hue ranges with cumulative pixels in the image corresponding to the at least one analysis area.

In operation 1530, the display apparatus 100 may calculate an edge component ratio of the image corresponding to the at least one analysis area.

In operation 1540, the display apparatus 100 may classify into a class corresponding to image complexity by comparing the image information obtained in operations 1510, 1520 and 1530 with a reference value.

In operations 1540 and 1550, the display apparatus 100 may determine a class (first class) corresponding to high image complexity when the number of objects in the image is at least a reference number. In an embodiment of the disclosure, the display apparatus 100 may determine a class (first class) corresponding to high image complexity when the number of hue ranges of the hue histogram is at least a reference number. In an embodiment of the disclosure, the display apparatus 100 may determine a class (first class) corresponding to high image complexity when the edge component ratio is at least a reference ratio. The reference number may differ by object to be compared, e.g., the number of objects, the number of hue ranges, etc.

In operation 1560, the display apparatus 100 may output a dimming control signal including a first dimming value for high intensity for an analysis area determined to be the class (first class) corresponding to high image complexity.

The display apparatus 100 may control the brightness of the image for each analysis area. The display apparatus 100 may provide different current data for each block. The display apparatus 100 may control one or more blocks belonging to an analysis area with a dimming control signal including the same first dimming value. The display apparatus 100 may control the brightness of the image for each analysis area.

In operations 1540 and 1570, the display apparatus 100 may determine a class (second class) corresponding to low image complexity when the number of objects in the image is less than the reference number. In an embodiment of the disclosure, the display apparatus 100 may determine a class (second class) corresponding to low image complexity when the number of hue ranges of the hue histogram is less than the reference number. In an embodiment of the disclosure, the display apparatus 100 may determine a class (second class) corresponding to low image complexity when the edge component ratio is less than the reference ratio.

In operation 1580, the display apparatus 100 may output a dimming control signal including a second dimming value for low intensity for an analysis area determined to be the class (second class) corresponding to low image complexity. The display apparatus 100 may control the brightness of the image for each analysis area.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

**Claims**

1. A display apparatus (100) comprising:

   a display (130);
   a memory (120) storing one or more instructions; and
   one or more processors (110) configured to execute the one or more instructions stored in the memory (120), wherein the one or more instructions, when executed by the one or more processors (110) individually or collectively, cause the display apparatus (100) to:

   obtain, for an image comprising at least one analysis area, image complexity information of the at least one analysis area,
   classify the at least one analysis area into a class based on the image complexity information, and
   generate a dimming control signal configured to control a brightness of the at least one analysis area based on the class.

2. The display apparatus (100) of claim 1, wherein the image complexity information comprises at least one of a number of objects in the at least one analysis area, a number of hue ranges with cumulative pixels in the at least one analysis area, or an edge component ratio of the at least one analysis area.

3. The display apparatus (100) of claim 1 or 2, wherein the one or more instructions, when executed by the one or more processors (110) individually or collectively, cause the display apparatus (100) to identify a number of objects in the at least one analysis area by applying the at least one analysis area to an artificial intelligence (AI) model, and classify the at least one analysis area into the class based on the identified number of objects.

4. The display apparatus (100) of claim 3, wherein the one or more instructions, when executed by the one or more processors (110) individually or collectively, cause the display apparatus (100) to:

   based on the identified number of objects being at least a reference number, classify the at least one analysis area into a first class, and
   based on the identified number of objects being less than the reference number, classify the at least one analysis area into a second class.

5. The display apparatus (100) of any of claims 1 to 4, wherein the one or more instructions, when executed by the one or more processors (110) individually or collectively, cause the display apparatus (100) to:

   convert color components of pixels in the at least one analysis area,
   obtain a hue histogram comprising a distribution of pixels that have the converted color components and are accumulated in each of a plurality of hue ranges,
   obtain a number of the plurality of hue ranges with cumulative pixels in the hue histogram, and
   identify the class based on the number of the plurality of hue ranges.

6. The display apparatus (100) of any of claims 1 to 5, wherein the one or more instructions, when executed by the one or more processors (110) individually or collectively, cause the display apparatus (100) to:

   obtain an edge component ratio corresponding to a point where values of pixels belonging to the at least one analysis area are discontinuous, and
   classify the at least one analysis area into the class based on the edge component ratio.

7. The display apparatus (100) of any of claims 1 to 6, wherein the one or more instructions, when executed by the one or more processors (110) individually or collectively, cause the display apparatus (100) to:

   classify the at least one analysis area into the class by obtaining an image complexity value based on the image complexity information and classifying the at least one analysis area into the class based on the image complexity value, wherein the class corresponds to image complexity values greater than or equal to a predetermined threshold, and

based on the at least one analysis area being classified into the class, generate the dimming control signal to cause the brightness of the at least one analysis area to decrease.

8. The display apparatus (100) of any of claims 1 to 7, wherein the one or more instructions, when executed by the one or more processors (110) individually or collectively, cause the display apparatus (100) to:

classify the at least one analysis area into the class by obtaining an image complexity value based on the image complexity information and classifying the at least one analysis area into at least one of a first class or a second class based on the image complexity value, wherein the first class corresponds to image complexity values greater than or equal to a predetermined threshold and the second class corresponds to image complexity values less than the predetermined threshold,

based on the at least one analysis area being classified into the first class, cause the dimming control signal to include a first dimming value corresponding to a first decrease in the brightness of the at least one analysis area, and

based on the at least one analysis area being classified into the second class, cause the dimming control signal to include a second dimming value corresponding to a second decrease in the brightness of the at least one analysis area, wherein the second decrease in the brightness is less than the first decrease in the brightness.

9. The display apparatus of claim 8,

wherein the dimming control signal comprises at least one of a pulse width modulation (PWM) signal or a pulse amplitude modulation (PAM) signal,

wherein, based on the dimming control signal including the PWM signal, a PWM duty ratio corresponding to the first dimming value is smaller than a PWM duty ratio corresponding to the second dimming value, and

wherein, based on the dimming control signal including the PAM signal, a PAM amplitude corresponding to the first dimming value is smaller than a PAM amplitude corresponding to the second dimming value.

10. The display apparatus (100) of any of claims 1 to 9,

wherein the at least one analysis area comprises one or more blocks each comprising a preset number of pixels, and

wherein the one or more instructions, when executed by the one or more processors (110) individually or collectively, cause the display apparatus (100) to:

identify a dimming value for each of the one or more blocks, and
cause the dimming control signal to have a same dimming value for the one or more blocks.

11. The display apparatus (100) of any of claims 1 to 10,

wherein the display (130) comprises a backlight driving circuit (1130) and a backlight unit (1140),
the one or more processors (110) are configured to execute the one or more instructions to provide the dimming control signal to the backlight driving circuit (1130), and
wherein the backlight driving circuit (1130) is configured to control a brightness of the backlight unit (1140) based on the dimming control signal.

12. A method of operating a display apparatus (100), the method comprising:

obtaining, for an image comprising at least one analysis area, image complexity information of the at least one analysis area (210);
classifying the at least one analysis area into a class based on the image complexity information (220); and
generating a dimming control signal configured to control a brightness of the at least one analysis area based on the class (230).

13. The method of claim 12, wherein the image complexity information comprises at least one of a number of objects in the at least one analysis area, a number of hue ranges with cumulative pixels in the at least one analysis area, or an edge component ratio of the at least one analysis area.

14. The method of claim 12 or 13, wherein the classifying the at least one analysis area (220) comprises:

obtaining an image complexity value based on the image complexity information and classifying the at least one analysis area into at least one of a first class or a second class based on the image complexity value, wherein the first class corresponds to image complexity values greater than or equal to a predetermined threshold and the second class corresponds to image complexity values less than the predetermined threshold,

wherein, based on the at least one analysis area being classified into the first class, the generating the dimming control signal comprises causing the dimming control signal to include a first dimming value corresponding to a first decrease in the brightness of the at least one analysis area,

wherein, based on the at least one analysis area being classified into the second class, the generating the dimming control signal comprises causing the dimming control signal to include a second dimming value corresponding to a second decrease in the brightness of the at least one analysis area, wherein the second decrease in the brightness is less than the first decrease in the brightness,

wherein the dimming control signal comprises at least one of a pulse width modulation (PWM) signal or a pulse amplitude modulation (PAM) signal,

wherein, based on the dimming control signal including the PWM signal, a PWM duty ratio corresponding to the first dimming value is smaller than a PWM duty ratio corresponding to the second dimming value, and

wherein, based on the dimming control signal including the PAM signal, a PAM amplitude corresponding to the first dimming value is smaller than a PAM amplitude corresponding to the second dimming value.

15. A non-transitory computer readable medium having instructions stored therein, which when executed by at least one processor cause the at least one processor to execute a method of operating a display apparatus (100), the method comprising:

obtaining, for an image comprising at least one analysis area, image complexity information of the at least one analysis area;

classifying the at least one analysis area into a class based on the image complexity information; and

generating a dimming control signal configured to control a brightness of the at least one analysis area based on the class.

# FIG. 1

ANALYZE IMAGE COMPLEXITY

Duty

High

Low

Amplitude

Decreased Amplitutde

Time

EP 4 787 360 A1

# FIG. 2

START

OBTAIN, FOR IMAGE COMPRISING AT LEAST ONE
ANALYSIS AREA, IMAGE COMPLEXITY INFORMATION
OF THE AT LEAST ONE ANALYSIS AREA — 210

CLASSIFY THE AT LEAST ONE ANALYSIS AREA
BASED ON IMAGE COMPLEXITY INFORMATION — 220

GENERATE DIMMING CONTROL SIGNAL TO CONTROL
BRIGHTNESS OF AT LEAST ONE ANALYSIS
AREA BASED ON DETERMINED CLASS — 230

END

# FIG. 3

310

# FIG. 4

EP 4 787 360 A1

# FIG. 5

510

520

# FIG. 6

NUMBER OF PIXELS

610

200

HUE RANGE

RANGE 1 ( (0~31)
RANGE 2 (32~63)
RANGE 3 (64~95)
RANGE 4 (96~127)
RANGE 5 (128~159)
RANGE 31 (959~990)
RANGE 32 (991~1023)

NUMBER OF PIXELS

620

200

HUE RANGE

RANGE 1 ( (0~31)
RANGE 2 (32~63)
RANGE 3 (64~95)
RANGE 4 (96~127)
RANGE 5 (128~159)
RANGE 31 (959~990)
RANGE 32 (991~1023)

# FIG. 7

401

710

**OUTPUT 20%**

EDGE
COMPONENT
DETECTION
MODULE

402

**OUTPUT 60%**

# FIG. 8

810

| CLASS CLASSIFICATION | NUMBER OF OBJECTS | EDGE COMPONENT RATIO | HUE HISTOGRAM HUE RANGES |
|---|---|---|---|
| CLASS 1 | AT LEAST 20 | AT LEAST 60% | AT LEAST 9 |
| CLASS 2 | AT LEAST 6 | AT LEAST 40% | AT LEAST 5 |
| CLASS 3 | OTHERS | | |

# FIG. 9A

910

Duty

High — — Duty ratio: 60%

Low

Period

920

Duty

High — — Duty ratio: 100%

Low

Period

# FIG. 9B

930

940

# FIG. 10

MEMORY — 120

OBJECT INFORMATION DETECTION MODEL — 410

HUE HISTOGRAM EXTRACTION MODULE — 1010

EDGE COMPONENT DETECTION MODULE — 710

CLASS CLASSIFICATION MODULE — 1020

DIMMING SIGNAL GENERATION MODULE — 1030

PROCESSOR — 110

DISPLAY — 130

100

# FIG. 11A

DISPLAY — 130

DISPLAY DRIVING CIRCUIT — 1110

DISPLAY PANEL — 1120

DIMMING CONTROL SIGNAL

BACKLIGHT DRIVING CIRCUIT — 1130

BACKLIGHT UNIT — 1140

# FIG. 11B

# FIG. 12

DIMMING
CONTROL SIGNAL

130a

DISPLAY

1150

DISPLAY
DRIVING CIRCUIT

1160

DISPLAY
PANEL

# FIG. 13

INITIAL BRIGHTNESS

OUTPUT BRIGHTNESS

DIMMING VALUE: 50%

DIMMING VALUE: 20%

# FIG. 14

| | | | |
|---|---|---|---|
| 1440 | TUNER | | 1480 — VIDEO PROCESSOR |
| 1450 | COMMUNICATION UNIT | 110 — PROCESSOR | 130 — DISPLAY |
| 1430 | DETECTOR | | 1485 — AUDIO PROCESSOR |
| 1431 | MICROPHONE | | 1460 — AUDIO OUTPUT MODULE |
| 1432 | CAMERA | | 1495 — POWER MODULE |
| 1433 | PHOTO RECEIVER | | |
| 1470 | INPUT/OUTPUT MODULE | | |
| | | 120 — MEMORY | |

100

# FIG. 15

```
                              START

  ┌──────────────┐   ┌──────────────────┐   ┌──────────────┐
  │   1510       │   │   1520           │   │   1530       │
  │ COMPUTE      │   │ COMPUTE NUMBER   │   │ CALCULATE    │
  │ NUMBER OF    │   │ OF HUE RANGES    │   │ EDGE         │
  │ OBJECTS IN   │   │ WITH CUMULATIVE  │   │ COMPONENT    │
  │ IMAGE        │   │ PIXELS IN IMAGE  │   │ RATIO        │
  └──────────────┘   └──────────────────┘   └──────────────┘
```

1510 COMPUTE NUMBER OF OBJECTS IN IMAGE

1520 COMPUTE NUMBER OF HUE RANGES WITH CUMULATIVE PIXELS IN IMAGE

1530 CALCULATE EDGE COMPONENT RATIO

1540 IMAGE INFORMATION ≥ REFERENCE VALUE? — NO

YES

1550 DETERMINE CLASS CORRESPONDING TO HIGH IMAGE COMPLEXITY

1560 OUTPUT DIMMING CONTROL COMMAND INCLUDING FIRST DIMMING VALUE WITH HIGH INTENSITY

1570 DETERMINE CLASS CORRESPONDING TO LOW IMAGE COMPLEXITY

1580 OUTPUT DIMMING CONTROL COMMAND INCLUDING SECOND DIMMING VALUE WITH LOW INTENSITY

END

## INTERNATIONAL SEARCH REPORT

| International application No. |
| --- |
| **PCT/KR2024/015489** |

| A. | CLASSIFICATION OF SUBJECT MATTER |
| --- | --- |

G09G 3/34(2006.01)i; **G06T 7/13**(2017.01)i; **G06T 7/90**(2017.01)i; **G06V 10/56**(2022.01)i; **G06V 10/82**(2022.01)i; **G06V 10/764**(2022.01)i

According to International Patent Classification (IPC) or to both national classification and IPC

| B. | FIELDS SEARCHED |
| --- | --- |

Minimum documentation searched (classification system followed by classification symbols)

G09G 3/34(2006.01); G02B 6/35(2006.01); G02B 6/36(2006.01); G02F 1/133(2006.01); G09G 3/20(2006.01); G09G 3/3233(2016.01); G09G 3/3266(2016.01); G09G 3/36(2006.01); G09G 5/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(image), 복잡도(complexity), 밝기(brightness), 조절(control), 디밍(dimming)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2588126 B1 (SAMSUNG ELECTRONICS CO., LTD.) 13 October 2023 (2023-10-13)<br>See paragraphs [0016]-[0079] and figures 1-5 and 9. | 1-15 |
| Y | KR 10-2013-0097509 A (LG DISPLAY CO., LTD.) 03 September 2013 (2013-09-03)<br>See paragraphs [0015]-[0050] and [0075]-[0077] and figures 1, 2 and 25. | 1-15 |
| Y | KR 10-2018-0058606 A (ELECTRONICS AND TELECOMMUNICATIONS RESEARCH INSTITUTE)<br>01 June 2018 (2018-06-01)<br>See paragraphs [0022]-[0034] and figure 1. | 3,4 |
| A | US 2023-0178028 A1 (LG DISPLAY CO., LTD.) 08 June 2023 (2023-06-08)<br>See claims 1-12. | 1-15 |
| A | KR 10-2141032 B1 (SAMSUNG DISPLAY CO., LTD.) 05 August 2020 (2020-08-05)<br>See paragraphs [0072]-[0118] and figure 1. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 January 2025** | **10 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015489**

| Patent document cited in search report | | | Publication date (day/month/year) | Patent family member(s) | | | Publication date (day/month/year) |
|---|---|---|---|---|---|---|---|
| KR | 10-2588126 | B1 | 13 October 2023 | CN | 108022566 | A | 11 May 2018 |
| | | | | KR | 10-2018-0047860 | A | 10 May 2018 |
| | | | | US | 10347211 | B2 | 09 July 2019 |
| | | | | US | 2018-0122296 | A1 | 03 May 2018 |
| KR | 10-2013-0097509 | A | 03 September 2013 | CN | 103295542 | A | 11 September 2013 |
| | | | | CN | 103295542 | B | 10 February 2016 |
| | | | | KR | 10-1354333 | B1 | 27 January 2014 |
| | | | | US | 2013-0222221 | A1 | 29 August 2013 |
| | | | | US | 2016-0027384 | A1 | 28 January 2016 |
| | | | | US | 9189998 | B2 | 17 November 2015 |
| | | | | US | 9601062 | B2 | 21 March 2017 |
| KR | 10-2018-0058606 | A | 01 June 2018 | KR | 10-2267040 | B1 | 21 June 2021 |
| | | | | US | 10663974 | B2 | 26 May 2020 |
| | | | | US | 2018-0143646 | A1 | 24 May 2018 |
| US | 2023-0178028 | A1 | 08 June 2023 | CN | 116246574 | A | 09 June 2023 |
| | | | | EP | 4195195 | A1 | 14 June 2023 |
| | | | | KR | 10-2023-0086049 | A | 15 June 2023 |
| | | | | KR | 10-2732436 | B1 | 25 November 2024 |
| | | | | US | 11862105 | B2 | 02 January 2024 |
| KR | 10-2141032 | B1 | 05 August 2020 | KR | 10-2015-0101053 | A | 03 September 2015 |
| | | | | US | 2015-0243223 | A1 | 27 August 2015 |

Form PCT/ISA/210 (patent family annex) (July 2022)